# EUROPÄISCHE PATENTSCHRIFT

(11) **EP 3 706 531 B1**
(45) Veröffentlichungstag und Bekanntmachung des Hinweises auf die Patenterteilung: **06.10.2021**
(21) Anmeldenummer: 18807566.7
(22) Anmeldetag: 09.11.2018
(51) Int. Cl.: A01B 59/06, A01B 71/06

(54) **FAHRZEUGSEITIGE UND ANBAUGERÄTESEITIGE ZAPFWELLENVERBINDUNGSEINRICHTUNG SOWIE EINE ZAPFWELLENVERBINDUNGSVORRICHTUNG MIT DIESEN BEIDEN ZAPFWELLENVERBINDUNGEINRICHTUNGEN**
VEHICLE-SIDE AND ACCESSORY-SIDE POWER TAKE-OFF SHAFT CONNECTING DEVICE AND POWER TAKE-OFF SHAFT CONNECTING UNIT COMPRISING THE TWO POWER TAKE-OFF SHAFT CONNECTING DEVICES
SYSTÈME DE LIAISON D'ARBRE DE PRISE DE FORCE CÔTÉ VÉHICULE ET CÔTÉ ÉQUIPEMENT AINSI QUE DISPOSITIF DE LIAISON D'ARBRE DE PRISE DE FORCE PRÉSENTANT CES DEUX SYSTÈMES DE LIAISON D'ARBRE DE PRISE DE FORCE

(30) Priorität: 10.11.2017 DE 102017126482
(43) Veröffentlichungstag der Anmeldung: 16.09.2020
(73) Patentinhaber: SYN TRAC GmbH, 4822 Bad Goisern a.H. (AT)
(72) Erfinder: PUTZ, Stefan, 4822 Bad Goisern (AT)
(74) Vertreter: HGF
(86) Internationale Anmeldenummer: PCT/EP2018/080820
(87) Internationale Veröffentlichungsnummer: WO 2019/092207

(56) Entgegenhaltungen:
- EP-A1- 3 011 816
- WO-A1-90/02481
- DE-A1- 4 132 889
- US-B1- 9 033 074

## Beschreibung

Die vorliegende Erfindung betrifft eine Zapfwellenverbindungsvorrichtung und ein Verfahren zur Herstellung einer Zapfwellenverbindung.

Ein Nebenabtrieb, auch als Zapfwelle (oder nach der Abkürzung des englischen Begriffs power take-off als PTO) bezeichnet, stellt vor allem bei Traktoren sowie Lastkraftwagen und einigen Nutzfahrzeugen eine zumeist zuschaltbare mechanische Antriebsquelle an einem Nebenausgang des Getriebes bereit. Die mechanische Antriebsenergie kann direkt über eine Gelenkwelle genutzt werden oder angebaute Anbaugeräte, wie z.B. Mähbalken, Riemengetriebe oder Hydraulikpumpen, antreiben.

Bei modernen Traktoren befindet sich die Zapfwelle mittig zwischen dem Dreipunktgestänge am Heck, bei Modellen mit Frontanbauoption auch ergänzend an der Vorderseite.

Wenn die Geräte bei einem stehenden Fahrzeug angetrieben werden sollen, ist zur Steuerung einfach mit dem Gaspedal oder Handgashebel die Drehzahl des Motors und damit die Zapfwellendrehzahl zu regeln (Seilwinde, Beregnungsspumpen). Dies wird als Direktantrieb bezeichnet. Häufigen Einsatz findet dieser Nebenabtrieb an kommunalen Fahrzeugen, die zum Straßenreinigen, Salzstreuen und Schneeräumen eingesetzt werden.

Bei Traktoren wird der Nebenabtrieb Zapfwelle genannt und dient dem Antrieb von Wasserpumpen, Mähmaschinen, Ladewagen und vielen weiteren landwirtschaftlichen Anbaugeräten. Auch in der Forstwirtschaft findet die Zapfwelle Anwendung, zum Beispiel bei modernen Holzspaltgeräten.

An den profilierten Wellenstummel, der aus dem Getriebe herausragt, wird eine mit einer Keilwellen- oder Evolventenprofil-Verzahnung versehene Gelenkwelle aufgesteckt. Die Sicherung dieser Welle erfolgte früher durch einen federdruckgesicherten Schiebestift, der in eine umlaufende runde Nut auf dem Wellenstummel der Zapfwelle eingriff. Mit Einführung der DIN EN 12965 im Jahre 2005 sind Schiebestiftverschlüsse an der Schlepperseite verboten und im Reparatur- oder Austauschfall durch rotationssymmetrische Verschlüsse zu ersetzen. Bei allen gängigen Verschlussarten ist die Kardanwelle werkzeuglos abnehmbar. Die gängigen Profilformen der Zapfwelle sind das 1-3/8-Zoll- und 1-3/4-Zoll-Keilwellenprofil mit sechs "Zähnen", das 1-3/8-Zoll-Zahnwellenprofil mit 21 Zähnen und das 1 3/4-Zoll-Zahnwellenprofil mit 20 Zähnen (Evolventenprofil).

Verwendung findet ein Nebenabtrieb bei LKW, Nutzfahrzeugen und Traktoren auch zum Sekundärantrieb. In den meisten Fällen ist dies eine Hydraulikpumpe, die über Schlauchleitungen kleinere Ölmotoren antreibt oder Hubzylinder mit Energie versorgt. An Traktoren ist auch der Anbau von Winkel- und Riemengetrieben üblich. Dies wird als indirekter Antrieb bezeichnet.

Folgende Arten von Zapfwellen sind bekannt.

Eine Motorzapfwelle ist im Allgemeinen über eine gesonderte Kupplung oder Doppelkupplung direkt mit dem Motor verbunden und läuft damit bei einer Standarddrehzahl (s. u.) nur in Abhängigkeit von der Motordrehzahl. Sie ermöglicht das Anhalten oder Anfahren der Zugmaschine bei weiter laufendem Nebengerät. Bei bestimmten Erntemaschinen wie zum Beispiel Ballenpresse, Selbstbinder oder gezogener Mähdrescher kann es sonst zu einer Überlastung kommen, was oft ein "händisches Freimachen" der Verstopfung nötig macht.

Eine Getriebezapfwelle ist über die Fahrkupplung und ein Getriebe mit dem Motor verbunden, die Nenndrehzahlen sind genormt. Die beiden Standard-Drehzahlen 540/min und 1000/min sind so untersetzt, dass sie im Bereich der Motor-Nenndrehzahl (Höchstleistung) erreicht werden. Seit einiger Zeit gibt es auch die 540E und 1000E (Economy) genannten Drehzahlen, bei der die Nenndrehzahl der Zapfwelle bei reduzierter Motordrehzahl, meist in der Nähe des höchsten Motordrehmomentes bei circa 1400 bis 1600/min erreicht wird. Damit ist es möglich, Geräte mit geringer Leistungsaufnahme kraftstoffsparend zu betreiben.

Eine Wegezapfwelle nimmt ihr Drehmoment nach dem Fahrgetriebe ab. Damit hängt ihre Drehzahl und oft auch die Drehrichtung vom gewählten Gang und somit der Geschwindigkeit ab. Ebenso wie die Getriebezapfwelle stoppt diese, wenn die Fahrkupplung getrennt wird. Diese Zapfwelle wird zum Beispiel bei Triebachsanhängern eingesetzt. Damit kann in schwierigem Gelände die Traktion des Zuges verbessert und ein Festfahren vermieden werden. Aus der DE 602 09 396 T2 ist ein Kuppelgestell für landwirtschaftliche Maschinen bekannt, wobei das Kuppelgestell einer Antriebseinheit mit einem Kraftabtrieb, mit einer Ausgangswelle und einer Arbeitseinheit mit einer Eingangswelle besitzt, wobei eine Keilzahnkupplung ? vorgesehen ist, um die Eingangs- und Ausgangswelle winkelig mit einander zu kuppeln, wobei die Eingangs- und Ausgangswelle durch einen gesonderten Aktuierungsschritt miteinander verbunden werden.

Aus der DE 35 09 095 A1 ist eine Getriebeeinheit mit Gegenwelle bekannt, wobei die Getriebeeinheit parallele Eingangs- und Ausgangswellen besitzt, die in einem Gehäuse montiert sind, wobei die Eingangswelle in der Gegenwelle eines Getriebes gelagert ist und das Gehäuse der Einheit an dem Getriebegehäuse befestigt ist. Ein Eingangszahnrad ist verschiebbar auf der Eingangswelle aufgekeilt angrenzend an ihr gelagertes Ende. Die Eingangswelle trägt ferner ein Eingangskettenrad. Auf der Ausgangswelle ist drehbar ein Ausgangszahnrad gelagert, dass in Eingriff mit dem Eingangszahnrad steht und es ist ein Ausgangskettenrad mit dem Eingangskettenrad über ein Kettentrieb gekoppelt. Mittels einer Kupplung auf der Ausgangswelle wird alterierend das Ausgangszahnrad oder das Ausgangskettenrad der Ausgangskette gekoppelt, während das Eingangszahnrad ein Kopplungsteil hat und verschiebbar ist zum Eingriff mit einem Kupplungsglied auf der Gegenwelle, um diese mit der Eingangswelle der Einheit zu koppeln.

Aus der AT 51 4147 B1 ist ein Kopplungsteil bekannt, welches aus einem wannenartigen Gegenkopplungsteil und einem entsprechenden Einschub ausgebildet ist, wobei diese beiden Bauteile mechanisch ineinander gezogen werden können, um ein landwirtschaftliches Fahrzeug mit einem Anbaugerät zu verbinden. Nach einer mechanischen Verbindung dieser Kopplungsvorrichtung können in einem nächsten Schritt elektronische, elektrische oder hydraulische Verbindungen hergestellt werden, wobei nach der mechanischen Verbindung der Fahrzeuge oder des Fahrzeuges und eines Anbaugerätes nachfolgend mit einer weiteren Aktuierung bewegliche Zapfwellen axial bewegt und miteinander verbunden werden. Eine weitere Zapfwellenkupplungsvorrichtung ist aus der EP3011816A1 bekannt.

Aufgabe der vorliegenden Erfindung ist es, eine für verschiedene Antriebsarten verwendbare sichere und zuverlässige Zapfwellenverbindungvorrichtung bereitzustellen, die auf schnelle und einfache Weise miteinander verbind- bzw. koppelbar sind.

Diese Aufgabe wird mit einer Zapfwellenverbindungsvorrichtung mit den Merkmalen des Anspruchs 1 gelöst.

Vorteilhafte Weiterbildungen sind in den Unteransprüchen angegeben.

Es ist eine weitere Aufgabe, ein Verfahren zum Herstellen einer Zapfwellenverbindung zwischen einem Fahrzeug und einem Anbaugerät oder einer Zusatzachse zu schaffen, die einfach und sicher erfolgen kann.

Die Aufgabe wird mit einem Verfahren mit den Merkmalen des Anspruchs 19 gelöst.

Die Zapfwellenverbindungsvorrichtung umfasst eine erfindungsgemäße fahrzeugseitige Zapfwellenverbindungseinrichtung und eine, damit lösbar, kraftschlüssig verbind- und koppelbare, erfindungsgemäße anbaugeräteseitige Zapfwellenverbindungseinrichtung. Diese sind so ausgestaltet, dass bei einer Kopplung von Fahrzeug und Anbaugerät eine automatische Kopplung der Zapfwellen ohne zusätzliche Aktivierung erfolgt. Hierzu ist die Zapfwellenverbindungsvorrichtung axial dem Fahrzeug oder dem Anbaugerät oder einer koppelbaren Zusatzachse bzw. an den Kopplungs- und Gegenkopplungselementen eines Fahrzeuges und eines Anbaugerätes oder einer Zusatzachse axial festgelegt.

Die erfindungsgemäße fahrzeugseitige Zapfwellenverbindungseinrichtung umfasst eine Kupplungswelle, eine damit verbundene Lagerungswelle und einen Lagersitz, wobei die Kupplungswelle an einer Kopplungsseite eine mit Flankenspiel ausgeführte Außenverzahnung aufweist, und wobei die Lagerungswelle in dem Lagersitz mittels einer Lagerungseinrichtung drehbar gelagert ist und im Lagersitz eine in etwa ringförmige Schulter ausgebildet ist, die einen axialen Anschlag für die Kupplungswelle ausbildet, wobei der Lagersitz an einem fahrzeugseitigen Ende eine Anschlagplatte aufweist, und ein fahrzeugseitiges Ende der Kupplungswelle eine napfförmige Ausnehmung mit Innenverzahnung aufweist und ein kopplungsseitiges Ende der Lagerungswelle eine korrespondierend ausgebildete Außenverzahnung aufweist, um eine Verdrehsicherung auszubilden und wobei Kupplungswelle und Lagerungswelle mittels einer Schraubverbindung miteinander verbunden sind.

Zwischen Lagerungseinrichtung und Anschlagplatte kann zumindest eine Tellerfeder angeordnet sein.

Die anbaugeräteseitige Zapfwellenverbindungseinrichtung umfasst eine napfförmig ausgebildete Kupplungsnabe und einen Lagersitz, wobei die Kupplungsnabe an einer Kopplungsseite eine mit Flankenspiel ausgeführte Innenverzahnung aufweist, die korrespondierend zur Außenverzahnung der Kupplungswelle ausgebildet ist, und wobei die Kupplungsnabe anbaugeräteseitig einen zylindrischen Lagerabschnitt aufweist, der in dem Lagersitz mittels einer Lagerungseinrichtung drehbar gelagert ist und im Lagersitz eine in etwa ringförmige Schulter ausgebildet ist, die einen axialen Anschlag für die Kupplungsnabe ausbildet, wobei der Lagersitz an einem anbaugeräteseitigen Ende eine Anschlagwandung aufweist.

Zwischen Lagerungseinrichtung und Anschlagwandung kann zumindest eine Tellerfeder angeordnet ist.

Das fahrzeugseitige Ende der Lagerungswelle kann eine radial umlaufende, mit einem geringen Spiel ausgeführte Verzahnung aufweisen.

Weiterhin kann eine Verbindungswelle vorgesehen sein, die mit der Lagerungswelle verbindbar ist. Die Verbindungswelle weist an ihrem kopplungsseitigen Ende ebenfalls radial umlaufend eine mit einem geringen Spiel ausgeführte Verzahnung auf.

In der Lagerungswelle kann am fahrzeugseitigen Ende eine sich in axialer Richtung erstreckende Zentrierausnehmung zum Aufnehmen eines Zentrierzapfens ausgebildet sein.

Die Verbindungswelle kann an ihrem kopplungsseitigen Ende den entsprechenden Zentrierzapfen aufweisen. Weiterhin kann eine Verbindungsmuffe zum Verbinden von Lagerungswelle und Verbindungswelle vorgesehen sein, die eine entsprechende Innenverzahnung, die korrespondierend zu den Außenverzahnungen der Lagerungswelle und der Verbindungswelle ausgeführt ist, aufweisen.

Zentrierzapfen und Zentrierausnehmung können auch entsprechend umgekehrt angeordnet sein.

Mittels der Verbindungsmuffe sind Lagerungswelle und Verbindungswelle über die entsprechenden Außenverzahnungen und die entsprechende Innenverzahnung miteinander verbindbar. Eine Zentrierung in axialer Richtung, die einen unwuchtfreien Lauf ermöglicht, wird über den Zentrierzapfen und die Zentrierausnehmung hergestellt.

Die Verbindungswelle kann mittels entsprechender Sicherungseinrichtungen, beispielsweise mittels Seeger-Ringen mit der Lagerungswelle und der Verbindungswelle gesichert werden.

Die Verbindungswelle ist vorzugsweise ausgebildet, um eine Verbindung zwischen Kupplungswelle und einer Zapfwellenkupplung in einem Fahrzeuggetriebe herzustellen.

Eine Dockingaufnahme wird über eine große (Durchmesser ca. 258 mm), mechanisch bearbeitete Bohrung in der ersten Platte auf einem Zentrieransatz am Zentralrohrflansch des Achsmittelstücks positioniert. Diese Präzision ermöglicht, dass für die Verbindung des Zapfwellenabtriebs des Getriebes und dem Zapfwellenkuppler in der Kopplungseinrichtung bzw. in einer Dockingaufnahme eine Verbindungswelle mit verzahnten Muffen verwendet werden kann. Eine teure und vor allem nicht wartungsfreie Verbindung mittels Kardanwelle ist dadurch nicht notwendig.

Die Erfindung wird im Folgenden anhand einer Zeichnung beispielhaft erläutert. Es zeigen dabei:

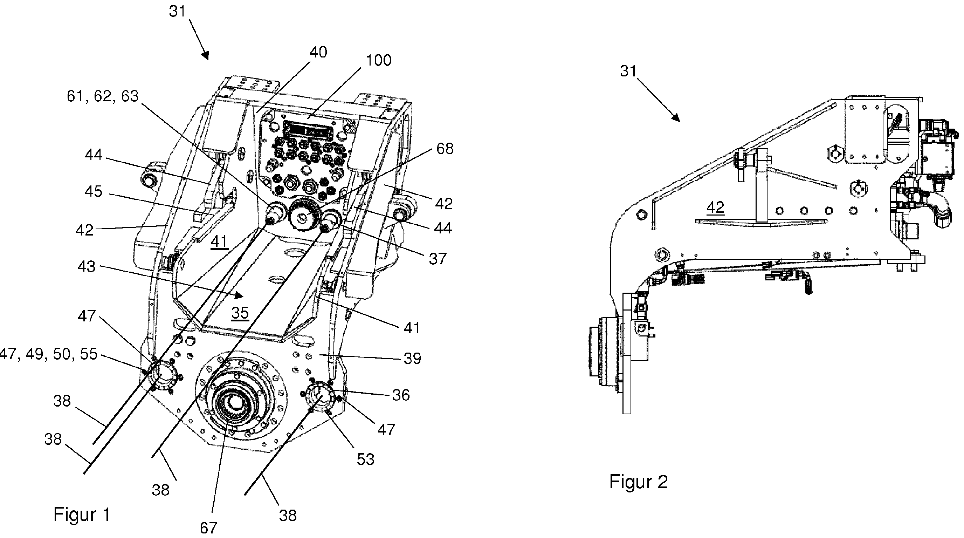

- Figur 1:: eine perspektivische Darstellung einer Dockingaufnahme,
- Figur 2:: eine seitliche Draufsicht auf die Dockingaufnahme,
- Figur 3:: eine Draufsicht von vorne auf die Dockingaufnahme, und
- Figur 4:: eine Draufsicht von oben auf die Dockingaufnahme.
- Figur 5:: eine perspektivische Darstellung eines Dockingeinschubes,
- Figur 6:: eine Draufsicht von vorne auf den Dockingeinschub,
- Figur 7:: eine seitliche Draufsicht auf den Dockingeinschub,
- Figur 8:: eine Draufsicht von oben auf den Dockingeinschub,
- Figur 9:: eine perspektivische Teil-Explosionsdarstellung einer Keilgabel mit Hydraulikzylinder und einer Verriegelungseinrichtung,
- Figur 10:: eine weitere perspektivische Teil-Explosionsdarstellung der Keilgabel mit Hydraulikzylinder und der Verriegelungseinrichtung,
- Figur 11:: eine perspektivische Explosionszeichnung einer Kupplungsplatte und einer Dockingaufnahme, und
- Figur 12:: eine perspektivische Explosionszeichnung einer weiteren Kupplungsplatte und eines Dockingeinschubes.
- Figur 13:: eine seitlich geschnittene Darstellung einer erfindungsgemäßen Zapfwellenverbindungsvorrichtung,
- Figur 14:: eine perspektivische Explosionsdarstellung der Zapfwellenverbindungsvorrichtung, und
- Figur 15:: eine seitlich geschnittene Darstellung der Kopplungsvorrichtung mit einer Dockingaufnahme und einem Dockingeinschub.

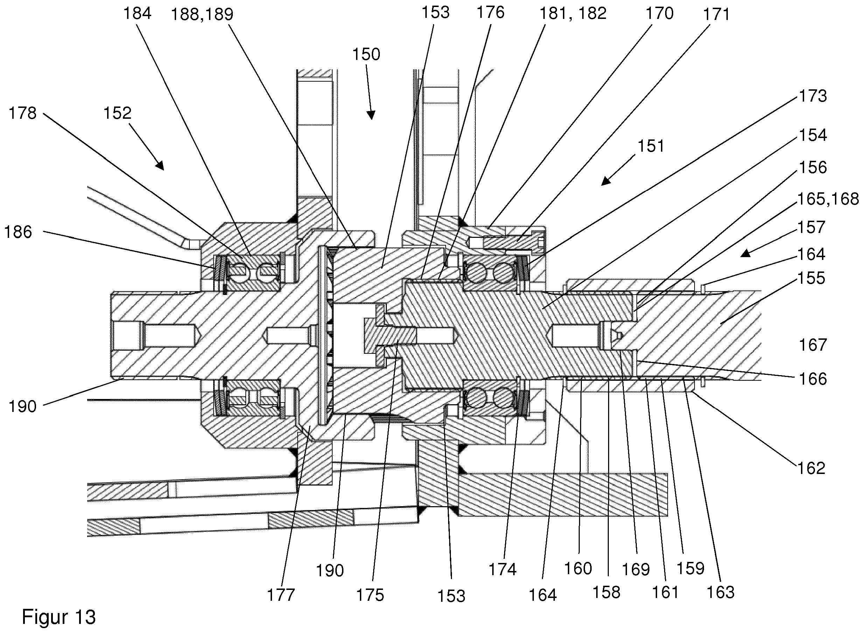

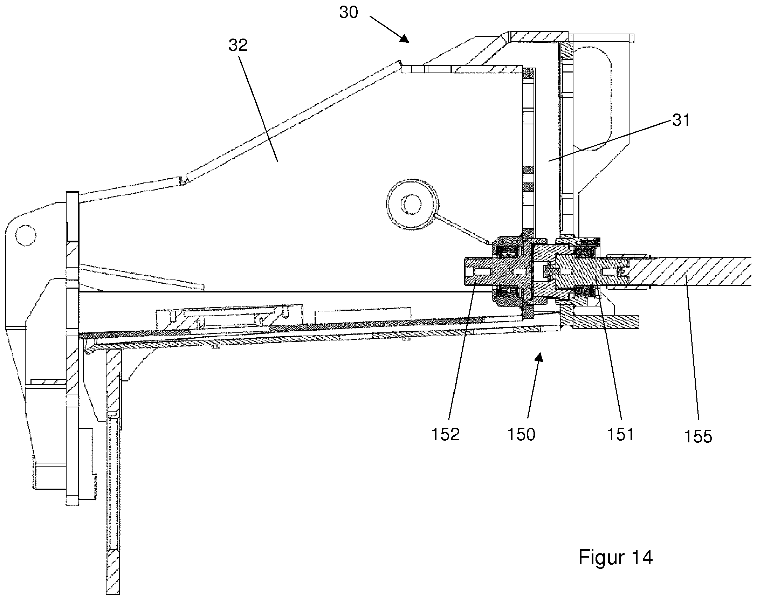

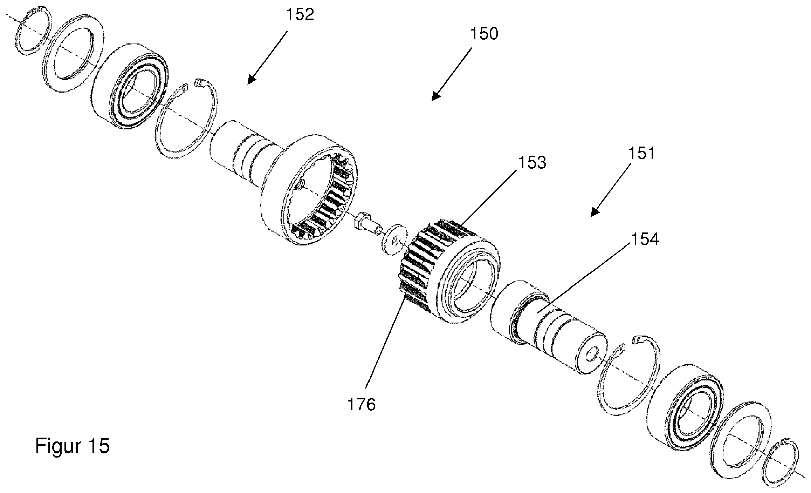

Im Folgenden wird eine erfindungsgemäße Zapfwellenverbindungsvorrichtung 150, umfassend eine fahrzeugseitige Zapfwellenverbindungseinrichtung 151 und eine, damit lösbar, kraftschlüssig verbind- und koppelbare, anbaugeräteseitige Zapfwellenverbindungseinrichtung 152, anhand eines Ausführungsbeispiels erläutert (Figuren 13 bis 15).

Fahrzeugseitig umfasst die Zapfwellenverbindungseinrichtung 151 eine Kupplungswelle 153, eine damit verbundene Lagerungswelle 154 und eine Verbindungswelle 155.

Ein fahrzeugseitiges Ende der Verbindungswelle 156 ist über eine Zapfwellenkupplung (nicht dargestellt) mit einem Fahrzeuggetriebe (nicht dargestellt) verbunden.

Die Verbindungswelle 155 ist mit der Lagerungswelle 154 verbunden. Zum Verbinden von Verbindungswelle 155 und Lagerungswelle 154 weisen die Verbindungswelle 155 und die Lagerungswelle 154 in einem Verbindungsbereich 157 an ihrer jeweiligen Mantelwandung 158, 159 eine Außenverzahnung 160, 161 auf.

Im Bereich dieser Verzahnungen 160, 161 ist eine korrespondierend ausgebildete, rohrförmige Muffe 162 vorgesehen, die eine entsprechende Innenverzahnung 163 aufweist. Die Verbindungsmuffe 162 ist mittels entsprechender Seegerringe 164 gegen ein axiales Verrutschen, Verschieben sowohl mit der Lagerungswelle 154 als auch mit der Verbindungswelle 155 verbunden.

Weiterhin kann die Verbindungswelle 155 an ihrem kopplungs- bzw. verbindungsseitigen Ende 165 eine Stirnfläche 166 mit einem sich in Längsrichtung erstreckenden Zentrierzapfen 167 aufweist, wobei die Lagerungswelle 154 entsprechend an ihrem fahrzeugseitigen Ende 168 eine korrespondierend ausgebildete Zentrierausnehmung 169 aufweist.

Eine später noch erläuterte Dockingaufnahme 31 weist einen entsprechenden Lagersitz 170 zur Lagerung der Lagerungswelle 154 auf. Dieser Lagersitz ist Bestandteil der fahrzeugseitigen Zapfwellenverbindungseinrichtung 151 und kann mit der Dockingaufnahme nicht-lösbar mittels Schweißverbindungen oder lösbar mittels entsprechender Schraubverbindungen verbunden sein.

In diesem Lagersitz 170 ist die Lagerungswelle 154 mittels einer Lagerungseinrichtung 171, vorzugsweise einem zweireihigen Kugellager, aufgenommen und gelagert.

An seinem fahrzeugseitigen Ende 172 weist der Lagersitz 170 eine Anschlagplatte 173 auf, wobei die Lagerungseinrichtung 171 an der Anschlagplatte 173 über entsprechende Tellerfedern 174 gelagert ist. Die Tellerfedern 174 sind ausgebildet, um die Lagerungseinrichtung 171 vor Abnutzung und Beschädigung beim Kuppelvorgang zweier Zapfwellen zu schützen.

Die Lagerungswelle 154 ist mit der napfförmig ausgebildeten Kupplungswelle 153 verbunden.

Die Kupplungswelle 153 ist über eine zentrale Schraubverbindung 175 mit dem verbindungsseitigen Ende 165 der Lagerungswelle 154 axial gesichert und verbunden. Diese Sicherung weist in axialer sowie in radialer Richtung ein Spiel auf das größer ist als ein Zahnflankenspiel in der entsprechenden Passverzahnung. Weiterhin weist die Kupplungswelle 153 eine entsprechende Innenverzahnung 176 auf.

Weiterhin weist die Kupplungswelle 153 an ihrem fahrzeugseitigen Ende 179 eine Ausnehmung 180 auf, in der die Lagerungswelle 154 aufgenommen ist. Zum Verbinden weist die Lagerungswelle 154 in diesem Bereich eine entsprechende Außenverzahnung 181 und die Kupplungswelle 153 eine korrespondierend ausgebildete Innenverzahnung 182 auf.

Die Kupplungswelle 153 bildet eine Verbindung bzw. Kopplung mit einer napfförmigen Kupplungsnabe 177 der anbaugeräteseitigen Zapfwellenverbindungseinrichtung 152 eines Anbaugerätes aus.

Die Kupplungsnabe 177 ist ähnlich der Kupplungswelle 153 in einem entsprechenden Lagersitz 178 in einem Dockingeinschub des Anbaugerätes axial festgelegt.

Am kopplungsseitigen Ende weist die Kupplungswelle 153 eine entsprechende Außenverzahnung 190 auf, um die Kupplungswelle 153 mit der Innenverzahnung der Kupplungsnabe 177 zu verbinden.

Eine radial umlaufende Schulter 183 der Kupplungswelle 153 bildet dabei einen Anschlag aus, der im Lagersitz 170 der Dockingaufnahme aufgenommen ist.

Die Kupplungsnabe 177 ist im Lagersitz 178 der anbaugeräteseitigen Zapfwellenverbindungseinrichtung 152 über eine Lagerungseinrichtung 184, wie z.B. einem zweireihigen Rillenkugellager drehbar gelagert, wobei der Lagersitz 178 einen axialen Anschlag 185 der Kupplungsnabe 177 ausbildet.

Im Lagersitz 178 sind im Bereich zwischen der Lagerungseinrichtung 184 und dem Lagersitz178 Tellerfedern 186 vorgesehen, um die Lagerungseinrichtung 184 vor Beschädigungen zu schützen.

Die Kupplungsnabe 177 weist an ihrem verbindungs- bzw. kopplungsseitigen Ende 187 eine napfförmige Aufnahme 188 mit der Innenverzahnung 189 zum Aufnehmen der Außenverzahnung 190 der Kupplungswelle 153 auf. Diese sind entsprechend korrespondierend ausgebildet.

Die Außenverzahnung der Kupplungswelle (153) und die Innenverzahnung der Kupplungsnabe (177) sind vorzugsweise derart ausgebildet, dass die Verzahnungen bzw. die Zähne zu den kopplungsseitigen Stirnflächen hin axial angefast sind oder mit stark angeschrägten konvergierenden Flanken ausgebildet sind, so dass die Zähne jeweils Findungstrichter für die korrespondierende Verzahnung bilden, so dass eine Innenverzahnung bzw. die Außenverzahnung an den schrägen Flanken oder Fasen beim Koppeln so entlang gleiten können, dass sich die Verzahnungen ineinander drehen und ineinander gleiten können.

Die beiden Verzahnungsbereiche zwischen Kupplungswelle und Lagerungswelle sowie zwischen Lagerungswelle und Verbindungswelle weisen ein geringes Spiel auf, um beim Verbinden der Kupplungsnabe und der Kupplungswelle eine leichtere In-Eingriffnahme der entsprechenden Zähne zu ermöglichen.

Fahrzeugseitig ist die Kupplungswelle somit in einer flankenzentrierten Passverzahnung mit Flankenspiel auf der Lagerungswelle angeordnet und mittels der vorstehend erläuterten Schraubenverbindung mit einer Unterlegscheibe gesichert. Die Verzahnung, die beim Kuppeln die Verbindung zur Kupplungsnabe herstellt, ist als flankenzentrierende Außenverzahnung mit Flankenspiel ausgeführt und die Zähne sind angespitzt. Die Anspitzung übernimmt dieselbe technische Aufgabe, wie dies bei Schaltverzahnungen in Synchronisierungen von Schaltgetrieben vorgesehen ist. Das Flankenspiel in den Passverzahnungen und das Spiel in der axialen Sicherung ermöglichen der Kupplungswelle die auftretenden Fluchtungs- und Winkelfehler zwischen Dockingaufnahme und Dockingeinschub auszugleichen. Das Lager ist spielfrei auf der Welle montiert. Wie vorstehend erläutert, ist das Lager im Lagersitz verschiebbar aufgenommen und axial mit Federn vorgespannt.

Beim Anbaugerät weist die Kupplungsnabe die Verzahnung auf, die beim Kuppeln die Verbindung zur Kupplungswelle herstellt. Diese ist als flankenzentrierte Innenverzahnung ausgeführt, wobei die Zähne ebenfalls entsprechend angespitzt sind. Die Lagereinrichtung ist spielfrei auf der Kupplungsnabe montiert. Die Lagereinrichtung ist im Lagersitz verschiebbar und ebenfalls axial mit Tellerfedern vorgespannt.

Im Folgenden wird ein erfindungsgemäßes Verfahren zum Verbinden bzw. Kuppeln der Kupplungswelle mit der Kupplungsnabe beschrieben.

Dabei ist vorgesehen, dass der Dockingeinschub mit den hydraulischen Einzugs- bzw. Fanghaken in die Dockingaufnahme eingezogen und über die vier Zapfen-/Buchsenverbindungen der ersten und zweiten Zentriereinrichtungen der Dockingaufnahme und des Dockingeinschubs zentriert wird. Nach erfolgter Zentrierung wird die Kupplungsnabe axial auf die Kupplungswelle geschoben. Die angespitzten Zähne auf der Kupplungswelle und Nabe stellen sicher, dass sich die Wellen in die kuppelbare Stellung drehen und die Kupplungsnabe auf die Kupplungswelle gleitet.

Sollten sich die Verzahnungen nicht von selbst bzw. nicht gleich genug ausrichten, da eine Zahn-auf-Zahn-Stellung vorliegt, ist es mittels der erfindungsgemäßen Zapfwellenverbindungseinrichtung möglich, dass sich sowohl Kupplungsnabe als auch Welle axial gegen die Tellerfedern bis zum entsprechenden Anschlag verschieben.

Falls der Kupplungsvorgang nicht erfolgreich abgeschlossen werden kann, wird dies dadurch signalisiert, dass die Kontrollkontakte in einer Elektrikkupplung nicht geschlossen werden. Dem Bediener wird eine entsprechende Meldung ausgegeben. Der Dockingeinschub muss manuell wieder ausgeschoben werden. Die Welle wird durch kurzzeitige Aktivierung der Zapfwellenkupplung verdreht und ein neuerlicher Kupplungsversuch wird gestartet. Die Federkraft ist dabei so ausgelegten, dass eine Beschädigung der Lager durch die Kraft der Einzugshaken sicher und zuverlässig vermieden wird.

Das Verbinden mittels der erfindungsgemäßen Zapfwelleneinrichtung erfolgt somit synchron mit dem vorstehend erläuterten Verbinden des Dockingeinschubes mit der Dockingaufnahme.

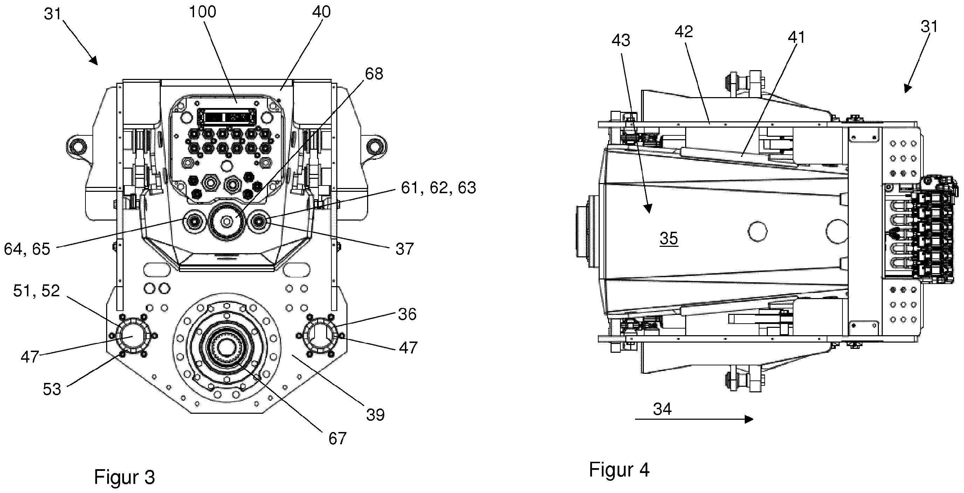

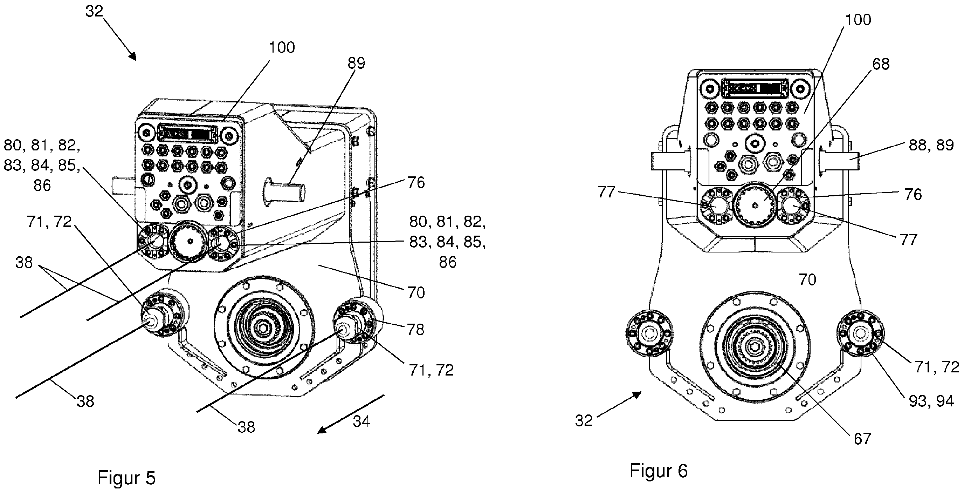

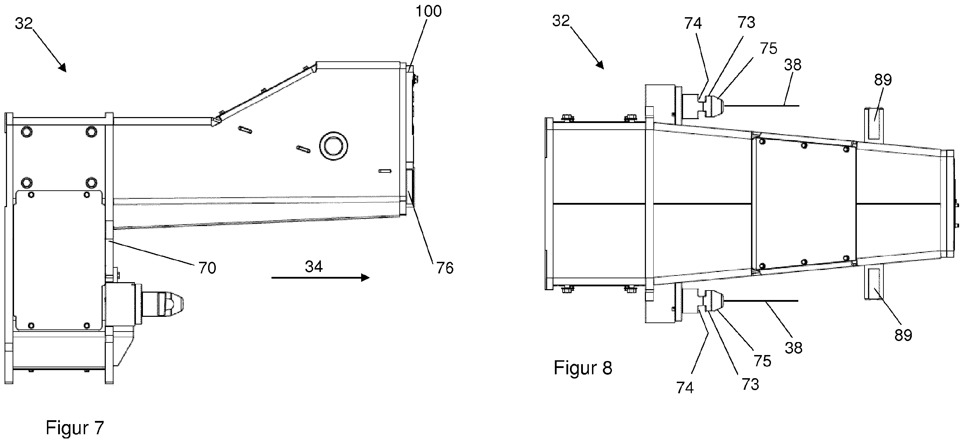

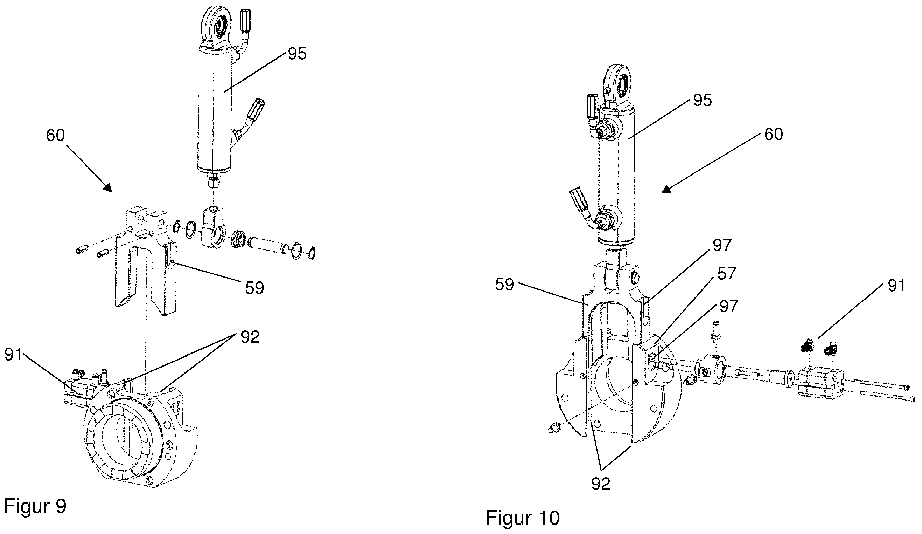

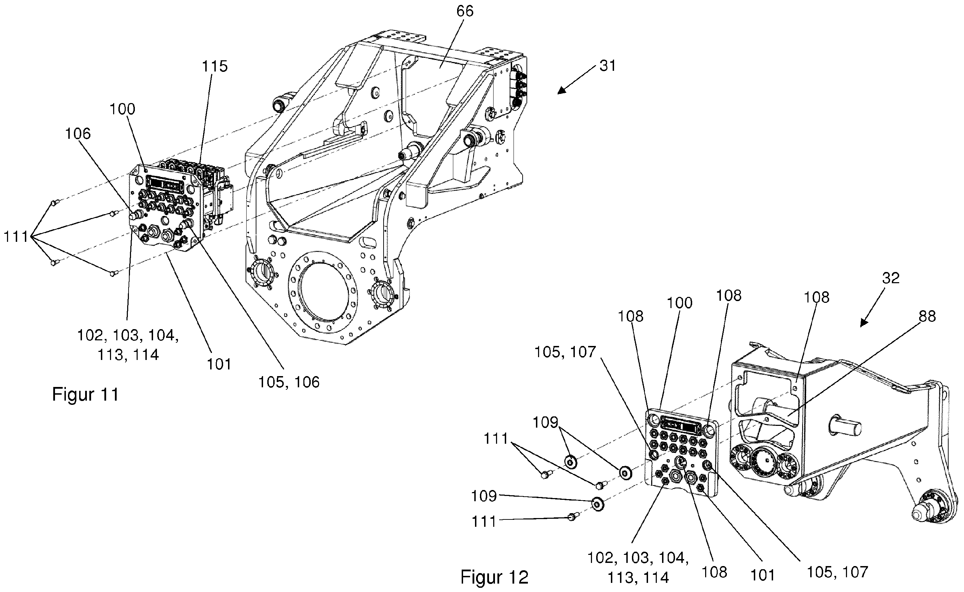

### Im Folgenden wird ein Kopplungssystem beschrieben (Figuren 3 bis 14)

Im Folgenden wird eine Dockingaufnahme 31 einer Dockingvorrichtung 30 (Kopplungsvorrichtung) zum Aufnehmen eines Dockingeinschubes 32 (Kopplungseinrichtung) anhand eines Ausführungsbeispiels beispielhaft beschrieben.

Die Dockingaufnahme 31 umfasst eine in etwa U-förmige Vorzentriereinrichtung 33 mit einer sich in einer Einführrichtung 34 in etwa konisch verjüngenden Einführwanne 35 zum Vorzentrieren eines korrespondierend zur Dockingaufnahme ausgebildeten Dockingeinschubes 32.

Weiterhin sind zumindest eine erste und eine zweite Zentriereinrichtung 36, 37 an der Dockingaufnahme 31 vorgesehen, wobei die erste und die zweite Zentriereinrichtung 36, 37 jeweils zwei Kopplungselemente und/oder Gegenkopplungselemente zum Verbinden mit entsprechenden Kopplungselemente und/oder Gegenkopplungselementen eines Dockingeinschubes 32 umfassen.

Weiterhin sind die erste und die zweite Zentriereinrichtung 36, 37 zum Zentrieren des Dockingeinschubes 32 bezüglich der Dockingaufnahme 31 entlang von vier Zentrierachsen 38 entsprechend der vier Kopplungs- bzw. Gegenkopplungselemente in der Einführrichtung 34 ausgebildet. Zudem umfasst die Dockingaufnahme 31 eine Einzugseinrichtung mit zwei hydraulisch betätigbaren Fanghaken 44 zum Einziehen des Dockingeinschubes 32 in die Dockingaufnahme 31 in der Einführrichtung 34.

Die Dockingaufnahme 31 umfasst zwei sich in vertikaler Richtung erstreckende und in horizontaler Richtung versetzt zueinander angeordnete Dockingwandungen 39, 40.

Diese beiden Dockingwandungen 39, 40 sind über eine sich in etwa in horizontaler Richtung erstreckende Einführwanne 35 miteinander verbunden.

Dementsprechend sind eine erste Dockingwandung 39 in vertikaler Richtung im Bereich unterhalb der Einführwanne 35 und eine zweite Dockingwandung als Begrenzung der Einführwanne 35 in horizontaler Richtung oberhalb der Einführwanne 35 angeordnet.

Die Einführwanne übernimmt die Aufgabe der Vorzentrierung beim Einführen eines Dockingeinschubes in die Dockingaufnahme durch Aufnahme eines korrespondierend zur Einführwanne 35 ausgebildeten Körpers des Dockingeinschubes 32.

Zum Vorzentrieren des Dockingeinschubes 32 beim Einführen in die Dockingaufnahme 31 verjüngt sich die Geometrie der Einführwanne 35 in Einführrichtung 34, um eine Vorzentrierung des Dockingeinschubes zu ermöglichen.

An beiden Seiten der Einführwanne 35 sind in etwa quer zur Einführrichtung 34 sich in vertikaler Richtung erstreckende innere und äußere Seitenwandungen 41, 42 vorgesehen. Diese inneren und äußeren Seitenwandungen 41, 42 sind unter einem vorbestimmten Winkel in Einführrichtung 34 derart angeordnet, dass sich ein Aufnahmeraum 43, begrenzt durch die inneren Seitenwandungen 41 und die Einführwanne 35, in Einführrichtung verjüngt.

In den inneren Seitenwandungen 41 sind Fangzapfenführungen 45 ausgebildet, die zum Führen und Aufnehmen entsprechender, an einem Dockingeinschub 32 ausgebildeter Fangzapfen vorgesehen sind.

In den inneren und äußeren Seitenwandungen 41, 42 sind in entsprechenden Bohrungen Wellen angeordnet, auf denen die Fanghaken 44 drehbar gelagert sind.

Somit sind die Fanghaken in einem durch die inneren und äußeren Seitenwandungen begrenzten Fanghakenraum angeordnet. Die Fanghaken sind von entsprechenden Fanghakenzylindern 46 betätigbar.

Im Bereich der ersten Dockingwandung 39 sind buchsenförmige Zentrierzapfenaufnahmen 47 (Gegenkopplungselemente) vorgesehen, die die erste Zentriereinrichtung 36 der Dockingaufnahme 31 ausbilden.

In Einführrichtung 34 ist zunächst die erste Dockingwandung 39 vorgesehen, die zwei Bohrungen 48 zur Aufnahme der buchsenförmigen Zentrierzapfenaufnahmen 47 aufweist.

In den Bohrungen 48 sind die buchsenförmigen Zentrierzapfenaufnahmen 47 angeordnet.

Die buchsenförmigen Zentrierzapfenaufnahmen 47 sind somit in Einführrichtung 34 hinter der ersten Dockingwandung 39 angeordnet.

Die buchsenförmigen Zentrierzapfenaufnahmen 47 umfassen in Einführrichtung 34 einen rohrförmigen Einführ-/Zentrierabschnitt 49 und einen Sicherungsabschnitt 54.

Der rohrförmige Einführ-/Zentrierabschnitt 49 weist eine sich kegelförmig verjüngende Einführausnehmung 50 auf, wobei eine entgegen der Einführrichtung 34 angeordnete vertikale Stirnfläche aus der ersten Dockingwandung 39 hervorsteht und eine erste axiale Anschlagfläche 51 einer ersten Anschlageinrichtung 52 ausbildet. In dieser kreisringförmigen ersten Anschlagfläche 51 sind radial umlaufend und gleich beabstandet voneinander Schmutzabführnuten 53 zum Aufnehmen und Abführen von Verunreinigungen ausgebildet.

Derartige Verschmutzungen würden die Position des Anschlages verändern. Dies ist dahingehend nachteilig, dass keine exakte Kopplung zwischen Dockingaufnahme und Dockingeinrichtung möglich ist.

Der rohrförmigen Einführ-/Zentrierabschnitt 49 weist eine sich in Einführrichtung 34 an die Einführausnehmung anschließende zylindrische Zentrierausnehmung 55 auf.

Der rohrförmige Sicherungsabschnitt 57 weist an einer entgegen der Einführrichtung 34 liegenden kreisringförmigen Stirnfläche Bohrungen 56 zum Verbinden mit der ersten Dockingwandung 39, bspw. mittels entsprechender Schraubenverbindungen, auf. Diese Stirnfläche weist einen größeren Durchmesser als rohrförmige Einführ-/Zentrierabschnitt 49 auf und bildet auf diese Weise eine radial umlaufende Anschlagschulter aus, die ein Verschieben der buchsenförmigen Zentrieraufnahme entgegen der Einführrichtung 34 verhindert.

Diese Ausführung hat den Vorteil, dass die Längskräfte die einerseits von Anbaugeräten eingeleitet werden und andererseits durch die Keilkräfte der Keilgabeln überlagert werden, nicht über einen Schraubverband in die Dockingaufnahme eingeleitet werden müssen.

Weiterhin sind im rohrförmigen Sicherungsabschnitt 57 sich in vertikaler Richtung erstreckende Nuten 58 zur Aufnahme von hydraulisch betätigbaren Keilgabeln 59 auf.

Die Keilgabeln 59 sind zum Fixieren eines entsprechenden Zentrierzapfens eines Dockingeinschubes 32 vorgesehen und in vertikaler Richtung von einer Freigabestellung in eine Fixierstellung verschiebbar. Die Keilgabeln 59 bilden somit eine axiale Sicherungseinrichtung 60 aus.

In etwa mittig in der ersten Dockingwandung 39 ist im Bereich zwischen den beiden buchsenförmigen Zentrierzapfenaufnahmen 47 eine Antriebswellenverbindungseinrichtung vorgesehen. Eine Antriebswellenverbindungseinrichtung 67 ist ein Teil einer Antriebswellenverbindungsvorrichtung zum Verbinden eines fahrzeugseitigen Endes einer Antriebswelle mit einem anbaugeräteseitigen Ende einer Antriebswelle.

In der zweiten Dockingwandung 40 ist eine Ausnehmung 66 zur Aufnahme einer Kupplungsplatte zum Bereitstellen von elektrischen, elektronischen, hydraulischen und/oder pneumatischen Verbindungen zwischen einem Fahrzeug und einem Anbaugerät ausgebildet.

Die Kupplungsplatte mit angeflanschtem Ventilblock kann durch Lösen von nur vier Schrauben zu Reparaturzwecken sehr einfach und schnell entgegen der Einführrichtung 34 ausgebaut werden.

Weiterhin sind im Bereich der zweiten Dockingwandung 40 zwei sich entgegen der Einführrichtung 34 erstreckende Zentrierzapfen 61 (Kopplungselemente) vorgesehen, die die zweite Zentriereinrichtung 37 der Dockingaufnahme 31 ausbilden.

Die Zentrierzapfen 61 weisen in Einführrichtung 34 einen kegelförmigen Einführabschnitt 62 und einen sich daran anschließenden zylindrischen Zentrierabschnitt 63 auf.

Eine in Einführrichtung 34 vorne liegende sich an den Zentrierabschnitt 63 anschließende kreisringförmige vertikale Stirnfläche bildet eine zweite Anschlagfläche 64 einer zweiten Anschlageinrichtung 65 aus.

Die Kopplungselemente und/oder die Gegenkopplungselemente der ersten und der zweiten Zentriereinrichtung bilden somit zumindest zwei axiale Anschlageinrichtungen aus, die eine Relativbewegung zwischen Dockingaufnahme und Dockingeinschub in Einführrichtung begrenzen.

Die Anschläge sind vorzugsweise an den ersten und/oder zweiten Zentrierzapfen und/oder an den ersten und/oder zweiten Zentrierausnehmungen sich in einer Ebene senkrecht zur Einführrichtung erstreckende kreisringförmige Anschlagflächen ausgebildet.

In etwa mittig in der zweiten Dockingwandung 40 ist im Bereich zwischen den beiden Zentrierzapfen 66 eine Zapfwellenverbindungseinrichtung 68 vorgesehen. Eine Zapfwellenverbindungseinrichtung 68 ist ein Teil einer Zapfwellenverbindungsvorrichtung zum Verbinden eines fahrzeugseitigen Endes einer Zapfwelle mit einem anbaugeräteseitigen Ende einer Zapfwelle.

Die Dockingaufnahme wird über eine große (Durchmesser ca. 258 mm), mechanisch bearbeitete Bohrung in der ersten Platte auf einem Zentrieransatz an einem Zentralrohrflansch eines Achsmittelstücks positioniert. Diese Präzision ermöglicht, dass für die Verbindung des Zapfwellenabtriebs des Getriebes und der Zapfwellenverbindungseinrichtung eine Verbindungswelle mit verzahnten Muffen verwendet werden kann. Eine teure und vor allem nicht wartungsfreie Verbindung mittels einer Kardanwelle ist dadurch nicht notwendig.

Im Folgenden wird der erfindungsgemäße Dockingeinschub 32 beispielhaft beschrieben. Der Dockingeinschub 32 ist korrespondierend zur Dockingaufnahme 31 ausgebildet.

Der Dockingeinschub 32 weist in Einführrichtung 34 zunächst eine erste Dockingwandung 70 auf. Die erste Dockingwandung 70 erstreckt sich im Wesentlichen in vertikaler Richtung und weist unterseitig eine zur Einführwanne 35 der Dockingaufnahme 31 korrespondierend ausgebildete Unterwandung 89 auf.

Weiterhin ist an der ersten Dockingwandung 70 in etwa mittig eine Antriebswellenverbindungseinrichtung vorgesehen.

Korrespondierend zu den Zentrierzapfenaufnahmen 47 der ersten Zentriereinrichtung 36 der Dockingaufnahme 31 sind an der ersten Dockingwandung 70 des Dockingeinschubs 31 sich in Einführrichtung 34 erstreckende erste Zentrierzapfen 71 einer ersten Zentriereinrichtung 72 des Dockingeinschubes 32 ausgebildet.

Die ersten Zentrierzapfen 71 weisen in Einführrichtung 34 einen zylindrischen Zentrierabschnitt 73 und einen sich daran anschließenden kegelförmigen Einführabschnitt 74 auf.

Weiterhin weisen die ersten Zentrierzapfen 71 entgegen der Einführrichtung kreisringförmige erste Anschlagflächen 93 auf, die eine erste Anschlageinrichtung 94 der ersten Zentriereinrichtung 72 ausbilden.

Im zylindrischen Zentrierabschnitt 73 sind sich in vertikaler Richtung erstreckende und konvex und korrespondieren zu den Keilgabeln 59 ausgebildete Keilgabelaufnahmenuten 74 vorgesehen.

An der ersten Dockingwandung ist ein sich in Einführrichtung erstreckender Einführkörper 75 zum Anordnen im Aufnahmeraum 43 der Dockingaufnahme 31 vorgesehen.

In Einführrichtung vorne weist der Einführkörper 75 eine sich in etwa in vertikaler Richtung erstreckende zweite Dockingwandung 76 auf.

In der zweiten Dockingwandung sind korrespondierend zu den zweiten Zentrierzapfen 61 der zweiten Zentriereinrichtung 37 der Dockingaufnahme 31 entsprechende Zentrierzapfenaufnahmen 77 einer zweiten Zentriereinrichtung 78 des Dockingeinschubes 32 ausgebildet.

Die zweite Dockingwandung 76 weist zwei Bohrungen 80 zur Aufnahme der buchsenförmigen Zentrierzapfenaufnahmen 77 auf.

In den Bohrungen 80 sind die buchsenförmigen Zentrierzapfenaufnahmen 77 angeordnet.

Die buchsenförmige Zentrierzapfenaufnahmen 77 umfassen in Einführrichtung 34 einen Zentrierabschnitt 82 und einen Einführabschnitt 81.

Der rohrförmige Einführabschnitt 81 weist eine sich kegelförmig verjüngende Einführausnehmung 83 auf, wobei eine entgegen der Einführrichtung 34 angeordnete Stirnfläche aus der zweiten Dockingwandung 76 hervorsteht und einen zweite axiale Anschlagfläche 84 einer zweiten Anschlageinrichtung 85 ausbildet. In dieser kreisringförmigen zweiten Anschlagfläche 85 sind radial umlaufend und gleich beabstandet voneinander Schmutzabführnuten 86 zum Aufnehmen und Abführen von Verunreinigungen ausgebildet.

Der rohrförmigen Zentrierabschnitt 82 weist eine sich entgegen der Einführrichtung 34 an die Einführausnehmung 83 anschließende zylindrische Zentrierausnehmung 87 auf.

Im Bereich zwischen diesen Zentrierzapfenausnehmungen 77 ist eine Zapfwellenverbindungseinrichtung angeordnet.

Im Bereich in vertikaler Richtung oberhalb der zweiten Zentriereinrichtung 78 ist eine Kupplungsplattenaufnahme ausgebildet.

Weiterhin ist am Einführkörper 75 eine sich quer zur Einführrichtung 34 erstreckende Fangzapfenwelle 88 angeordnet. Die Enden der Welle bilden Fangzapfen 89 aus. Diese Fangzapfen 89 werden beim Einführen des Dockingeinschubes 32 in die Dockingaufnahme 31 von den Fanghaken 44 der Dockingaufnahme 31 erfasst und anschließend wird mittels der hydraulisch betätigbaren Fanghaken 44 der Dockingeinschub 32 in die Dockingaufnahme 32 gezogen, wobei eine Unterwandung 90 des Einführkörpers 75 des Dockingeinschubes 32 entsprechend in der Einführwanne 35 der Dockingaufnahme 31 gleitet.

Neben einer axialen Verriegelung als Sicherungseinrichtung 60 weisen die hydraulischen Keilgabeln noch eine sich quer zur Einführrichtung erstreckende zweite Verriegelungseinrichtung auf. Die zweite Verriegelungseinrichtung umfasst einen pneumatisch betätigbaren Sicherungskörper, der die Keilgabeln in den Zentrierzapfenbuchsen fixiert.

Diese zweite Verriegelung kann nur erfolgen, wenn die hydraulische Keilgabel korrekt positioniert ist. Dementsprechend ist ein Sensor vorgesehen, um die Stellung der hydraulischen Keilgabel zu überprüfen.

Keilgabeln haben den Vorteil, dass sie gut automatisierbar sind. Die Keilgabeln sind zu jedem Zeitpunkt in den Keilgabelnuten geführt.

Gemäß einer alternativen Ausführungsform kann auch vorgesehen sein, dass die Zentriereinrichtungen bzw. deren Zentrierelemente (Zapfen, Buchsen) vertauscht sind.

Hierbei ist lediglich von entscheidender Bedeutung, dass sowohl die beiden Zentrierzapfen bzw. Zentrierausnehmungen der ersten und der zweiten Zentriereinrichtungen derart ausgebildet sind, dass alle vier Komponenten ein gleichzeitiges Zentrieren ermöglichen, da ein am Dockingeinschub angeordnetes Anbaugerät häufig ein sehr hohes Gewicht aufweist und dementsprechend eine genaue Zentrierung in axialer Einführrichtung notwendig ist.

Im Folgenden wird eine Kupplungsplatte 100 beschrieben.

Eine Kupplungsplatte 100 ist zum Ausbilden von elektrischen, elektronischen, hydraulischen und/oder pneumatischen Verbindungen vorgesehen.

Diese Kupplungsplatte 100 umfasst eine in etwa ebenflächige Basisplatte 101. Diese Basisplatte 101 kann mit einer Vielzahl von elektrischen, elektronischen, hydraulischen und/oder pneumatischen sowie mechanischen Verbindungselementen versehen sein.

An der Basisplatte 101 sind zumindest zwei hydraulische Anschlusseinrichtungen 113 ausgebildet.

Diese beiden hydraulischen Anschlusseinrichtungen 113 sind zum Betätigen von nahezu an allen verbindbaren Modulen vorhandenen Stützfußzylindern vorgesehen.

Zudem ist an der Basisplatte 101 zumindest eine elektronische Verbindungseinrichtung 102 zum Bereitstellen einer elektronischen Verbindung zwischen einer Steuereinrichtung eines Fahrzeuges und einer Steuereinrichtung eines Fahrzeuges vorgesehen. Diese elektronische Verbindung dient zum Identifizieren der Art des Modules bzw. des Anhängers bzw. des Anbaugerätes.

Weiterhin ist an der Basisplatte 101 zumindest eine elektrische Verbindungseinrichtung 103 angeordnet.

Diese elektrische Verbindungseinrichtung ist zum Betätigen eines Lichtes (z.B. Brems-, Vorder-, Rück-, Positions- oder Warnlicht) am Anbaumodul vorgesehen.

Weiterhin sind zwei elektrische Kontrollkontakte 104 die durch Koppeln des Dockingeischubes 32 mit der Dockingaufnahme 31 miteinander elektrisch verbunden werden, um zu detektieren, ob der Dockingeinschub 32 vollständig in die Dockingaufnahme 31 eingezogen ist und eine Sicherungs- und/oder Verriegelungseinrichtung aktiviert werden kann

Neben den vorstehend genannten Mindestverbindungseinrichtungen weist die Kupplungsplatte eine Zentriereinrichtung 105 auf. Diese Zentriereinrichtung 105 umfasst, wenn die Kupplungsplatte 100 für die Dockingaufnahme 31 vorgesehen ist, zumindest zwei Zentrierzapfen 106, wobei entsprechend an einer Kupplungsplatte des Dockingeinschubes 32 die korrespondierenden Zentrierausnehmungen 107 ausgebildet sind.

Die Zentriereinrichtung umfasst zumindest zwei Kopplungs- (Zentrierzapfen 106) und/oder Gegenkopplungselemente (Zentrierausnehmung 107).

Weiterhin sind in einer Kupplungsplatte 100 drei Verbindungsbohrungen 108 zum Verbinden der Kupplungsplatte 100 mit einem Dockingeinschub 32 oder einer Dockingaufnahme 31 vorgesehen.

In diesen Verbindungsbohrungen 108, vorzugsweise des Dockingeinschubes 32, sind rohrförmige Kunststoffbuchsen 109 bzw. Gummilager vorgesehen, aus einem elastischen Material anordbar, um ein geringes Spiel zu ermöglichen und so beim Verbinden zweier Kupplungsplatten die Präzision zu erhöhen.

In entsprechenden Ausnehmungen 110 der Kunststoffbuchsen 109 sind Verbindungsmittel 111, wie z.B. Schrauben, anordbar, um die Kupplungsplatte 100 mit einer Kopplungseinrichtung, wie z.B. einem Dockingeinschub 32 oder einer Dockingaufnahme zu verbinden.

Die Kunststoffbuchsen 109 bilden in Verbindung mit den Verbindungsmitteln 111 eine Lagerungseinrichtung 112 aus.

In der Basisplatte 101 sind auch pneumatische Verbindungseinrichtungen 114 vorgesehen.

Im Folgenden werden Merkmale der Kupplungsplatte näher beschrieben.

Eine fahrzeugseitig ausgebildete Kupplungsplatte 100 umfasst die in etwa ebenflächige Basisplatte 101, bei der anbaugeräteseitig elektrische Verbindungseinrichtung 103 und/oder elektronische Verbindungseinrichtung 102, wie z.B. Elektrostecker 102, hydraulische Anschlusseinrichtungen 113, wie z.B. Hydraulikkupplungen 113, und pneumatische Verbindungseinrichtungen 114, wie z.B. Druckluftkupplungen sowie Zentrierzapfen 106 zur Feinzentrierung der anbaugeräteseitigen Kupplungsplatte integriert sind.

Fahrzeugseitig ist ein Ventilblock 115 mit bis zu sechs doppelt wirkenden hydraulischen Steuergeräten (nicht dargestellt) angeflanscht.

Die Kupplungsplatte 100 ist hydraulisch derart ausgeführt, dass für eine Arbeitshydraulik nur die Druck-, Tank- und Lastmeldeleitungen angeschlossen sind. Die Leitung zwischen diesen Hauptanschlüssen und den Kupplungen eines Power-Beyond-Systems sowie der Versorgung des Ventilblocks 115 ist in die Basisplatte 101 integriert.

Die Basisplatte 101 ist über Verbindungsmittel 111 fest mit einer fahrzeugseitigen Dockingaufnahme 31 verschraubt.

Die geräteseitige Kupplungsplatte 100 am Dockingeinschub umfasst die entsprechenden Gegenstecker und Kupplungen und ist über die Lagerungseinrichtung 112 bzw. die Kunststoffbuchsen 109 und die Verbindungsmittel 111 fest mit einem Dockingeinschub 32 verbunden.

Die Lagerungseinrichtung 112 ist somit zum Bereitstellen eines geringfügigen Spiels der Kupplungsplatte in einer vertikalen und einer horizontalen Ebene bezüglich einer Kopplungseinrichtung ausgebildet. Das ermöglicht der Kupplungsplatte 100, sich über die Kunststoffbuchsen 109 bzw. Gummibuchsen und die darin vorgesehenen Bohrungen sich gegenüber den fahrzeugseitigen Zentrierzapfen 106 fein zu zentrieren, um eine für die Hydraulikkupplung erforderliche präzise Ausrichtung im Bereich von 0,05 mm zu erreichen.

Das Verbinden zweier Kupplungsplatten 100 erfolgt indem ein Dockingeinschub 32 mit einer Dockingaufnahme 31 verbunden wird.

Beim Verbinden zweier erfindungsgemäßer Kupplungsplatten 100 ist demgemäß vorgesehen, dass die Zentrierzapfen 106 einer mit einer Dockingaufnahme 31 verbundenen Kupplungsplatte 100 in die entsprechenden Zentrierausnehmungen 105 einer mit einem Dockingeinschub 32 verbundenen erfindungsgemäßen Kupplungsplatte eindringen und auf diese Weise die beiden Kupplungsplatten 100 insbesondere in einer vertikalen Verbindungsebene präzise zueinander ausrichten.

Auf diese Weise werden sämtliche an Dockingeinschub 32 und Dockingaufnahme 31 vorgesehenen elektrischen, elektronischen, hydraulischen und/oder pneumatischen Verbindungen miteinander verbunden.

Im Folgenden wird ein Verfahren zum Docking bzw. ein Einführen des Dockingeinschubes in die Dockingaufnahme bzw. ein erfindungsgemäßes Verfahren zum Verbinden eines Dockingeinschubes mit einer Dockingaufnahme beschrieben.

Zunächst wird der Einführkörper 75 des Dockingeinschubs im Bereich des Aufnahmeraums 43 der Dockingaufnahme 31, vorzugsweise durch Verfahren des Fahrzeuges und somit der daran angeordneten Dockingaufnahme 31, angeordnet.

Dabei erfolgt eine Vorzentrierung des Dockingeinschubes in der Dockingaufnahme anhand des Gleitens der Unter- bzw. Einführwandung 90 des Dockingeinschubes 32 in der Einführwanne 35 der Dockingaufnahme 31.

Nachdem eine Relativbewegung in Einführrichtung über eine vorbestimmte Länge erfolgt ist werden die Fanghaken 44 der Dockingaufnahme mittels der Fanghakenzylinder 46 betätigt und zunächst in vertikaler Richtung nach unten abgesenkt, so dass Fangausnehmungen 69 der Fanghaken 44 die Fangzapfen 89 des Dockingeinschubes hintergreifen.

Das Bewegen des Dockingeinschubes in die Dockingaufnahme erfolgt somit zunächst durch Bewegen des Fahrzeuges. Dabei erfolgt eine Vorzentrierung. Anschließend rasten die Fanghaken ein und ziehen den Dockingeinschub in Einführrichtung in die Dockingaufnahme.

Zwei Rollen, die in der Dockingaufnahme drehbar gelagert sind, bilden mit einem Schlitz im Fanghaken und einer Bahn auf der Oberseite des Fanghakens eine Kulissenführung. Diese Kulissenführung bewirkt, dass sich die Fanghaken beim Ausfahren zuerst in Fahrzeuglängsrichtung und anschließend nach oben bewegen. Dadurch ergibt sich eine Öffnung in die beim Einfahren in den Dockingeinschub die Fangzapfen eingeführt werden. Beim Einziehen der Fanghaken bewegen sich die Haken zuerst nach unten und verhaken sich mit den Fangzapfen. Anschließend wird der Dockingeinschub eingezogen.

Anschließend gleiten die Fangzapfen entlang einer Fangzapfenführung 45 in den inneren Seitenwandungen 41 der Dockingaufnahme 31, wobei die Fangzapfen 89 in der Fangzapfenführung 45 lediglich mit geringem Spiel angeordnet sind.

Durch eine weitere Bewegung des Dockingeinschubes 31 in Einführrichtung 34 erfolgt anschließend eine weitere Zentrierung des Dockingeinschubes 32 in der Dockingaufnahme 31 über die ersten und zweiten Zentriereinrichtungen 36, 37, 72, 78 der Dockingaufnahme 31 und des Dockingeinschubes 32 entlang der vier Zentrierachsen 38.

Dabei gleiten die zwei Zentrierzapfen 71 der ersten Zentriereinrichtung 72 des Dockingeinschubes 32 mit ihren kegelförmigen Einführabschnitten 74 in die kegelförmigen Einführöffnungen 50 der zwei Zentrierzapfenaufnahmen 47 der ersten Zentriereinrichtung 36 der Dockingaufnahme 31.

Gleichzeitig gleiten die kegelförmigen Flächen der Einführabschnitte 62 der Zentrierzapfen 61 der zweiten Zentriereinrichtung 37 der Dockingaufnahme 31 in die Einführausnehmungen 83 der Zentrierzapfenaufnahmen 77 der zweiten Zentriereinrichtung 78 des Dockingeinschubes.

Durch eine weitere Bewegung des Dockingeinschubes 31 in Einführrichtung 34 erfolgt anschließend eine weitere Feinzentrierung des Dockingeinschubes 32 in der Dockingaufnahme 31.

Dabei gleiten die zwei Zentrierzapfen 71 der ersten Zentriereinrichtung 72 des Dockingeinschubes 32 mit ihren zylindrischen Zentrierabschnitten 73 in die zylindrischen Zentrierausnehmungen 55 der zwei Zentrierzapfenaufnahmen 47 der ersten Zentriereinrichtung 36 der Dockingaufnahme 31.

Gleichzeitig gleiten die zylindrischen Zentrierabschnitte 63 der Zentrierzapfen 61 der zweiten Zentriereinrichtung 37 der Dockingaufnahme 31 in die Zentrierausnehmungen 87 der Zentrierzapfenaufnahmen 77 der zweiten Zentriereinrichtung 78 des Dockingeinschubes.

Die Bewegung des Dockingeinschubes 32 in Einführrichtung 34 hin zur Dockingaufnahme 31 wird durch die ersten Anschlagflächen 51, 93 der ersten Anschlageinrichtungen 52, 94 der ersten Zentriereinrichtung 36, 72 begrenzt.

Weiterhin wird die Bewegung des Dockingeinschubes 32 in Einführrichtung 34 hin zur Dockingaufnahme 31 durch die zweiten Anschlagflächen 64, 84 der zweiten Anschlageinrichtungen 65, 85 der ersten Zentriereinrichtung 36, 72 begrenzt.

Sobald die Anschlagflächen 51, 93 der ersten Anschlageinrichtungen 52, 94 und die Anschlagflächen 64, 84 der zweiten Anschlageinrichtung 65, 85 aneinander anstehen, ist das Einführen des Dockingeinschubes 32 in die Dockingaufnahme 31 in axialer Richtung begrenzt.

Der Dockingeinschub 32 ist nun vollständig in die Dockingaufnahme 31 eingeführt.

Vorzugsweise sind sowohl am Dockingeinschub 32 als auch an der Dockingaufnahme 31 elektrische Kontakte (nicht dargestellt) vorgesehen, die einander kontaktieren, sobald der Dockingvorgang beendet ist. Ein auf diese Weise generiertes Signal wird verwendet, um die Betätigungszylinder 95 der hydraulisch betätigbaren Keilgabeln 59 in vertikaler Richtung nach unten derart zu verschieben, dass Gabeln der Keilgabeln 59 in die Nuten 58 des Sicherungsabschnittes 57 der ersten Zentrierzapfen 71 der ersten Zentriereinrichtung 72 des Dockingeinschubes eingreifen und zusätzlich zu den Fanghaken 44 ein Auskoppeln des Dockingeinschubes 32 aus der Dockingaufnahme 31 verhindern.

Zur Sicherung der Keilgabeln ist eine pneumatisch betätigbare Verriegelungseinrichtung 91 vorgesehen, die entsprechende Verriegelungszapfen 96 durch im Sicherungsabschnitt 57 und in den Gabeln der Keilgabel 59 ausgebildete Verriegelungsbohrungen 97 anbringen und auf diese Weise die Position der Keilgabeln 59 fixieren und sichern.

Gleichzeitig sind in dieser Endstellung ggf. Zapfwellenverbindungseinrichtungen und/oder Antriebswellenverbindungeinrichtungen der Dockingaufnahme 31 und des Dockingeinschubes 32 miteinander verbunden.

### Bezugszeichenliste

- 30: Dockingvorrichtung
- 31: Dockingaufnahme
- 32: Dockingeinschub
- 33: Vorzentriereinrichtung
- 34: Einführrichtung
- 35: Einführwanne
- 36: erste Zentriereinrichtung
- 37: zweite Zentriereinrichtung
- 38: Zentrierachsen
- 39: erste Dockingwandung
- 40: zweite Dockingwandung
- 41: innere Seitenwandung
- 42: äußere Seitenwandung
- 43: Aufnahmeraum
- 44: Fanghaken
- 45: Fangzapfenführung
- 46: Fanghakenzylinder
- 47: Zentrierzapfenaufnahme
- 48: Bohrung
- 49: Einführ-/Zentrierabschnitt
- 50: kegelförmige Einführöffnung
- \51: erste axiale Anschlagfläche
- 52: erste Anschlageinrichtung
- 53: Schmutzabführnuten
- 54: rohrförmiger Zentrierabschnitt
- 55: zylindrische Zentrierausnehmung
- 56: Bohrung
- 57: Sicherungsabschnitt
- 58: Nuten
- 59: Keilgabel
- 60: axiale Sicherungseinrichtung
- 61: Zentrierzapfen
- 62: Einführabschnitt
- 63: Zentrierabschnitt
- 64: zweite Anschlagfläche
- 65: zweite Anschlageinrichtung
- 66: Ausnehmung
- 67: Antriebswellenverbindungseinrichtung
- 68: Zapfwellenverbindungseinrichtung
- 69: Fangausnehmungen
- 70: erste Dockingwandung
- 71: erster Zentrierzapfen
- 72: erste Zentriereinrichtung
- 73: zylindrischer Zentrierabschnitt
- 74: Keilgabelaufnahmenut
- 75: Einführkörper
- 76: zweite Dockingwandung
- 77: Zentrierzapfenaufnahme
- 78: zweite Zentriereinrichtung
- 79: Kupplungsplattenaufnahme
- 80: Bohrung
- 81: Sicherungsabschnitt
- 82: Zentrierabschnitt
- 83: Einführausnehmung
- 84: zweite Anschlagfläche
- 85: zweite Anschlageinrichtung
- 86: Schmutzabführnut
- 87: Zentrierausnehmung
- 88: Fangzapfenwelle
- 89: Fangzapfen
- 90: Unterwandung
- 91: Verriegelungseinrichtung
- 92: Keilgabelaufnahmenut
- 93: erste Anschlagfläche
- 94: erste Anschlageinrichtung
- 95: Betätigungszylinder Keilgabel
- 96: Verriegelungszapfen
- 97: Verriegelungsbohrung
- 100: Kupplungsplatte
- 101: Basisplatte
- 102: elektronische Verbindungseinrichtung
- 103: elektrische Verbindungseinrichtung
- 104: elektrischer Kontrollkontakt
- 105: Zentriereinrichtung
- 106: Zentrierzapfen
- 107: Zentrierausnehmung
- 108: Verbindungsbohrung
- 109: Kunststoffbuchse
- 110: Ausnehmung
- 111: Verbindungsmittel
- 112: Lagerungseinrichtung
- 113: hydraulische Anschlusseinrichtung
- 114: pneumatische Verbindungseinrichtung
- 115: Ventilblock
- 150: Zapfwellenverbindungsvorrichtung
- 151: fahrzeugseitige Zapfwellenverbindungseinrichtung
- 152: anbaugeräteseitige Zapfwellenverbindungseinrichtung
- 153: Kupplungswelle
- 154: Lagerungswelle
- 155: Verbindungswelle
- 156: fahrzeugseitiges Ende Verbindungswelle
- 157: Verbindungsbereich
- 158: Mantelwandung
- 159: Mantelwandung
- 160: Außenverzahnung
- 161: Außenverzahnung
- 162: Muffe
- 163: Innenverzahnung
- 164: Seegerring
- 165: kopplungsseitiges Ende
- 166: Stirnfläche
- 167: Zentrierzapfen
- 168: fahrzeugseitiges Ende
- 169: Zentrierausnehmung
- 170: Lagersitz
- 171: Lagerungseinrichtung
- 172: fahrzeugseitiges Ende
- 173: Anschlagplatte
- 174: Tellerfeder
- 175: Schraubverbindung
- 176: Innenverzahnung
- 177: Kupplungsnabe
- 178: Lagersitz
- 179: fahrzeugseitiges Ende Kupplungswelle
- 180: Ausnehmung
- 181: Außenverzahnung
- 182: Innenverzahnung Kupplungswelle
- 183: Schulter
- 184: Lagerungseinrichtung
- 185: axialer Anschlag
- 186: Tellerfeder
- 187: kopplungsseitiges Ende
- 188: napfförmige Aufnahme
- 189: Innenverzahnung Kupplungsnabe
- 190: Außenverzahnung Kupplungsnabe

## Patentansprüche

1. Zapfwellenverbindungsvorrichtung zum Verbinden eines Zapfwellenantriebes eines Fahrzeuges mit einem Zapfwellenantrieb eines Anbaugerätes, wobei eine fahrzeugseitige Zapfwellenverbindungseinrichtung und eine damit lösbar kraftschlüssig verbind- und koppelbare anbaugeräteseitige Zapfwellenverbindungseinrichtung vorhanden sind, wobei mechanische Kopplungselemente an dem Fahrzeug vorgesehen sind und hiermit korrespondierende mechanische Gegenkopplungselemente an einem Anbaugerät vorhanden sind, welche ineinander schiebbar und miteinander verriegelbar sind, wobei
die fahrzeugseitige Zapfwellenverbindungseinrichtung und die anbaugeräteseitige Zapfwellenverbindungseinrichtung jeweils axial an dem Fahrzeug oder dem Anbaugerät bzw. der Kopplungseinrichtung des Fahrzeuges und der Kopplungseinrichtung des Anbaugerätes festgelegt sind, so dass beim mechanischen Verbinden des Fahrzeuges und des Anbaugerätes die Zapfwellenverbindungseinrichtungen miteinander zwangsgekoppelt werden, **dadurch gekennzeichnet,**
**dass**
die Zapfwellenverbindungseinrichtung (151) fahrzeugseitig eine Kupplungswelle (153), eine damit verbundene Lagerungswelle (154) und eine Verbindungswelle (155) umfasst, wobei in einem Lagersitz (170) die Lagerungswelle (154) mittels einer Lagerungseinrichtung (171) aufgenommen und gelagert ist, wobei die Lagerungswelle (154) mit der napfförmig ausgebildeten Kupplungswelle (153) verbunden ist, wobei die Kupplungswelle 153 über eine zentrale Schraubverbindung 175 mit dem verbindungsseitigen Ende 165 der Lagerungswelle 154 axial gesichert und verbunden ist und die Kupplungswelle (153) eine Verbindung bzw. Kopplung mit einer napfförmigen Kupplungsnabe (177) der anbaugeräteseitigen Zapfwellenverbindungseinrichtung (152) eines Anbaugerätes ausbildet, wobei die Kupplungsnabe (177) in einem entsprechenden Lagersitz (178) in einem Dockingeinschub des Anbaugerätes axial festgelegt ist und am kopplungsseitigen Ende die Kupplungswelle (153) eine entsprechende Außenverzahnung (190) aufweist, um die Kupplungswelle (153) mit der Innenverzahnung der Kupplungsnabe (177) zu verbinden, wobei die Kupplungsnabe (177) an ihrem verbindungs- bzw. kopplungsseitigen Ende (187) eine napfförmige Aufnahme (188) mit der Innenverzahnung (189) zum Aufnehmen der Außenverzahnung (190) der Kupplungswelle (153) aufweist, wobei diese sind entsprechend korrespondierend ausgebildet sind.

2. Zapfwellenverbindungsvorrichtung nach Anspruch 1,
**dadurch gekennzeichnet,**
**dass** die Zapfwellenverbindungvorrichtung eine Kupplungswelle (153) mit einer Kopplungsseite umfasst, welche eine mit Flankenspiel ausgeführte Außenverzahnung aufweist und zudem eine Kupplungsnabe (177) als korrespondierende Zapfwellenverbindungseinrichtung (152) umfasst, die an einer Kopplungsseite eine mit Flankenspiel ausgeführte Innenverzahnung besitzt, die korrespondierend zur Außenverzahnung der Kupplungswelle (153) ausgebildet ist.

3. Zapfwellenverbindungsvorrichtung nach Anspruch 2,
**dadurch gekennzeichnet,**
**dass** die Außenverzahnung der Kupplungswelle (153) und die Innenverzahnung der Kupplungsnabe (177) derart ausgebildet sind, dass die Verzahnungen bzw. die Zähne zu den kopplungsseitigen Stirnflächen hin axial angefast sind oder mit stark angeschrägten konvergierenden Flanken ausgebildet sind, so dass die Zähne jeweils Findungstrichter für die korrespondierende Verzahnung bilden, so dass eine Innenverzahnung bzw. die Außenverzahnung an den schrägen Flanken oder Fasen beim Koppeln so entlang gleiten können, dass sich die Verzahnungen ineinander drehen und ineinander gleiten können.

4. Zapfwellenverbindungsvorrichtung nach einem der vorhergehenden Ansprüche, **dadurch gekennzeichnet, dass** eine fahrzeugseitige Zapfwellenverbindungseinrichtung (151) umfassend die Kupplungswelle (153), eine damit verbundene Lagerungswelle (154) und einen Lagersitz vorhanden ist, wobei die Kupplungswelle (153) an einer Kopplungsseite eine mit Flankenspiel ausgeführte Außenverzahnung aufweist, und wobei die Lagerungswelle (154) in dem Lagersitz mittels einer Lagerungseinrichtung drehbar gelagert ist und im Lagersitz eine in etwa ringförmige Schulter ausgebildet ist, die einen axialen Anschlag für die Kupplungswelle (153) ausbildet, wobei der Lagersitz an einem fahrzeugseitigen Ende eine Anschlagplatte aufweist, und ein fahrzeugseitiges Ende der Kupplungswelle (153), eine napfförmige Ausnehmung mit Innenverzahnung aufweist und ein kopplungsseitiges Ende der Lagerungswelle eine korrespondierend ausgebildete Außenverzahnung aufweist, um eine Verdrehsicherung auszubilden und wobei Kupplungswelle und Lagerungswelle (154) mittels einer Schraubverbindung miteinander verbunden sind.

5. Zapfwellenverbindungsvorrichtung nach einem der vorhergehenden Ansprüche, **dadurch gekennzeichnet, dass** eine anbaugeräteseitige Zapfwellenverbindungseinrichtung (152) vorhanden ist umfassend die napfförmig ausgebildete Kupplungsnabe (177) und einen Lagersitz (178), wobei die Kupplungsnabe (177) an einer Kopplungsseite eine mit Flankenspiel ausgeführte Innenverzahnung (189) aufweist, die korrespondierend zur Außenverzahnung einer Kupplungswelle (153) einer fahrzeugseitigen Zapfwellenverbindungseinrichtung ausgebildet ist, und wobei die Kupplungsnabe (177) anbaugeräteseitig einen zylindrischen Lagerabschnitt aufweist, der in dem Lagersitz (178) mittels einer Lagerungseinrichtung drehbar gelagert ist und im Lagersitz (178) eine in etwa ringförmige Schulter ausgebildet ist, die einen axialen Anschlag für die Kupplungsnabe (177) ausbildet, wobei der Lagersitz an einem anbaugeräteseitigen Ende eine Anschlagwandung aufweist.

6. Zapfwellenverbindungsvorrichtung nach einem der vorhergehenden Ansprüche, **dadurch gekennzeichnet, dass** zwischen Lagerungseinrichtung und Anschlagwandung zumindest eine Tellerfeder angeordnet ist.

7. Zapfwellenverbindungsvorrichtung nach einem der vorhergehenden Ansprüche, **dadurch gekennzeichnet, dass** eine Verbindungswelle (156) vorgesehen ist, die mit der Lagerungswelle (154) verbindbar ist, wobei die Verbindungswelle (156) und die Lagerungswelle (154) in einem Verbindungsbereich an ihrer jeweiligen Mantelwandung (158, 159) eine Außenverzahnung (160, 161) aufweisen, und wobei im Bereich dieser Verzahnungen eine korrespondierend ausgebildete, rohrförmige Muffe (162) vorgesehen ist, die eine entsprechende Innenverzahnung (163) aufweist, und die Lagerungswelle (154) mit der Verbindungswelle (155) verbindet.

8. Zapfwellenverbindungsvorrichtung nach einem der vorhergehenden Ansprüche, **dadurch gekennzeichnet, dass** ein fahrzeugseitiges Ende der Verbindungswelle (156) über eine Zapfwellenkupplung mit einem Fahrzeuggetriebe verbindbar ist.

9. Zapfwellenverbindungsvorrichtung nach einem der vorhergehenden Ansprüche, **dadurch gekennzeichnet, dass** die Verbindungsmuffe (162) mittels entsprechender Seegerringe (164) gegen ein axiales Verrutschen oder Verschieben, sowohl mit der Lagerungswelle (154) als auch mit der Verbindungswelle (155) verbunden ist.

10. Zapfwellenverbindungsvorrichtung nach einem der vorhergehenden Ansprüche, **dadurch gekennzeichnet, dass** die Verbindungswelle (155) an ihrem kopplungs- bzw. verbindungsseitigen Ende (165) eine Stirnfläche (166) mit einem sich in Längsrichtung erstreckenden Zentrierzapfen (167) aufweist, wobei die Lagerungswelle (154) entsprechend an ihrem fahrzeugseitigen Ende (168) eine korrespondierend ausgebildete Zentrierausnehmung (169) aufweist.

11. Zapfwellenverbindungsvorrichtung nach einem der vorhergehenden Ansprüche, **dadurch gekennzeichnet, dass** in einer Dockingaufnahme (31) zum Verbinden eines landwirtschaftlichen Fahrzeuges und eines Anbaugerätes mittels der Dockingaufnahme (31) und eines korrespondierenden Dockingeinschubes in der Dockingaufnahme (31) ein entsprechender Lagersitz (170) zur Lagerung der Lagerungswelle (154) ausgebildet ist, wobei der Lagersitz Bestandteil der fahrzeugseitigen Zapfwellenverbindungseinrichtung (151) ist und mit der Dockingaufnahme (31) unlösbar mittels Schweißverbindung oder lösbar, aber festgelegt mittels entsprechender Schraubverbindungen verbunden ist.

12. Zapfwellenverbindungsvorrichtung nach einem der vorhergehenden Ansprüche, **dadurch gekennzeichnet, dass** der Lagersitz (170) an seinem fahrzeugseitigen Ende (172) eine Anschlagplatte (173) aufweist, wobei die Lagerungseinrichtung (171) an der Anschlagplatte (173) über entsprechende Tellerfedern (174) gelagert ist, wobei die Tellerfedern (174) zum Schutz der Lagerungseinrichtung (171) vor Abnutzung und Beschädigung beim Kuppelvorgang zweier Zapfwellen ausgebildet ist.

13. Zapfwellenverbindungsvorrichtung nach einem der vorhergehenden Ansprüche, **dadurch gekennzeichnet, dass** die Lagerungswelle (154) mit der napfförmig ausgebildeten Kupplungswelle (153) verbunden ist, wobei eine Kupplungswelle (153) über eine zentrale Schraubverbindung (175) mit dem verbindungsseitigen Ende (165) der Lagerungswelle (154) axial gesichert und verbunden ist, wobei diese Sicherung in axialer sowie in radialer Richtung ein Spiel aufweist, das größer ist als ein Zahnflankenspiel in der entsprechenden Passverzahnung, wobei die Kupplungswelle (153) eine entsprechende Innenverzahnung (176) aufweist.

14. Zapfwellenverbindungsvorrichtung nach einem der vorhergehenden Ansprüche, **dadurch gekennzeichnet, dass** die Kupplungswelle (153) an ihrem fahrzeugseitigen Ende (179) eine Ausnehmung (80) aufweist, in der die Lagerungswelle (154) aufgenommen ist, wobei zum Verbinden die Lagerungswelle (154) in diesem Bereich eine entsprechende Außenverzahnung (181) aufweist und die Kupplungswelle eine korrespondierend ausgebildete Innenverzahnung (182) besitzt.

15. Zapfwellenverbindungsvorrichtung nach einem der vorhergehenden Ansprüche, **dadurch gekennzeichnet, dass** die Kupplungswelle (173) eine Verbindung bzw. Kopplung mit einer napfförmigen Kupplungsnabe (177) der anbaugeräteseitigen Zapfwellenverbindungseinrichtung (152) eines Anbaugerätes ausbildet.

16. Zapfwellenverbindungsvorrichtung nach einem der vorhergehenden Ansprüche, **dadurch gekennzeichnet, dass** die Kupplungsnabe (177) in gleicher Weise wie die Kupplungwelle (153) in einem entsprechenden Lagersitz (178) in einen Dockingeinschub (32) des Anbaugerätes axial festgelegt angeordnet ist.

17. Zapfwellenverbindungsvorrichtung nach einem der vorhergehenden Ansprüche, **dadurch gekennzeichnet, dass** die Kupplungswelle (153) am kopplungsseitigen Ende eine entsprechende Außenverzahnung (190) aufweist, um die Kupplungswelle (153) mit der Innenverzahnung der Kupplungsnabe (177) zu verbinden, wobei eine radial umlaufende Schulter (183) der Kupplungswelle (153) einen Anschlag ausbildet, der im Lagersitz (170) der Dockingaufnahme aufgenommen ist.

18. Zapfwellenverbindungsvorrichtung nach einem der vorhergehenden Ansprüche, **dadurch gekennzeichnet, dass** die Kupplungsnabe (177) im Lagersitz (178) der anbaugeräteseitigen Zapfwellenverbindungseinrichtung (152) über eine Lagerungseinrichtung (184), insbesondere ein Kugellager drehbar gelagert ist, wobei der Lagersitz (178) den axialen Anschlag (185) der Kupplungsnabe ausbildet, wobei im Lagersitz (178) im Bereich zwischen der Lagerungseinrichtung (184) und dem Lagersitz (178) Tellerfedern (186) vorgesehen sind, um die Lagerungseinrichtung (184) vor Beschädigungen zu schützen, wobei die Kupplungsnabe (177) an ihrem verbindungs- bzw. kopplungsseitigen Ende (187) eine napfförmige Aufnahme (188) mit der Innenverzahnung (189) zum Aufnehmen der Außenverzahnung (190) der Kupplungswelle (153) aufweist.

19. Verfahren zum Herstellen einer Zapfwellenverbindung zwischen einem eine Zapfwelle aufweisenden Fahrzeug und einer mit der Zapfwelle zu verbindenden Welle eines Anbaugerätes oder einer Zusatzachse mit einer Zapfwellenverbindungsvorrichtung nach einem der vorhergehenden Ansprüche, **dadurch gekennzeichnet, dass**, das Fahrzeug einerseits und das Anbaugerät und/oder die Zusatzachse andererseits über Dockingeinrichtungen verfügen, die miteinander korrespondieren und zum Herstellen einer mechanischen Verbindung zusammenwirken, wobei das Fahrzeug über eine Dockingaufnahme und das Anbaugerät über einen Dockingeinschub verfügt oder umgekehrt, wobei der Dockingeinschub mit hydraulischen Einzugs- oder Fanghaken in die Dockingaufnahme eingezogen wird, wobei eine Kupplungsnabe axial auf die Kupplungswelle, entsprechend der Einschubbewegung, die mit dem hydraulischen Einzugs- oder Fanghaken durchgeführt wird, aufgeschoben wird, wobei die Zähne mit ihren zur Kopplungsseite konvergierenden Flanken auf der Kupplungswelle und auf der Kupplungsnabe bei der Einschubbewegung entlang ihrer Zahnflanken aufeinandergleiten und dadurch die Wellen in die kuppelbare Stellung drehen und die Kupplungsnabe auf die Kupplungswelle gleitet.

## Claims

1. Power take-off connecting device to connect a power take-off drive of a vehicle to a power take-off drive of a mounted implement, wherein a power take-off connecting arrangement on the vehicle and therefore a releasable, frictionally attachable power take-off connecting arrangement on the mounted implement are present, wherein mechanical coupling elements are provided on the vehicle and mechanical mating coupling elements corresponding to them are provided on a mounted implement which can be pushed into each other and can be locked together, wherein
the power take-off connecting arrangement on the vehicle and the power take-off connecting arrangement on the mounted implement, each attached axially on the vehicle or on the mounted implement, or on the coupling arrangement on the vehicle and the coupling arrangement on the mounted implement, are arranged such that, during the mechanical attachment of the vehicle and the mounted implement, the power take-off connecting arrangements are permanently coupled together, **characterised in that**
the power take-off connecting arrangement (151) on the vehicle comprises a coupling shaft (153), a bearing shaft (154) connected to it and a connecting shaft (155) wherein the bearing shaft (154) is housed and supported in a bearing seat (170) by means of a bearing arrangement (171), wherein the bearing shaft (154) is connected to the bowl-shaped designed coupling shaft (153), wherein the coupling shaft 153 is secured and connected axially by a central screw connection 175 with the connecting end 165 of the bearing shaft 154 and the coupling shaft (153) forms a connection or coupling with a bowl-shaped coupling hub (177) of the power take-off connecting arrangement (152) of a mounted implement on the mounted implement, wherein the coupling hub (177) is established axially in a corresponding bearing seat (178) in a docking slot of the mounted implement and, on the end nearest the coupling of the coupling shaft (153), has a corresponding set of external teeth (190) to connect the coupling shaft (153) with the internal teeth of the coupling hub (177), wherein the coupling hub (177) has, on its connecting or coupling end (187), a bowl-shaped receptacle (188) with internal teeth (189) to mesh with the external teeth (190) of the coupling shaft (153), wherein these teeth are designed correspondingly.

2. Power take-off connecting device according to claim 1,
**characterised in that**
the power take-off connecting device comprises a coupling shaft (153) with a coupling side which has a set of external teeth designed with flank clearance and additionally comprises a coupling hub (177) as a corresponding power take-off connecting arrangement (152) which, on its coupling side, possesses a set of internal teeth designed with flank clearance, which is arranged, corresponding to the external teeth of the coupling shaft (153).

3. Power take-off connecting device according to claim 2,
**characterised in that**
the external teeth of the coupling shaft (153) and the internal teeth of the coupling hub (177) are designed such that the teeth arrangement, or the teeth, are chamfered axially on the coupling-side front faces or are designed with steeply bevelled converging flanks so that the teeth each form locating guides for the corresponding teeth so that an internal set of teeth or, respectively, the external teeth can slide along on the sloping flanks or chamfers when coupling so that the teeth can turn into each other and slide in each other.

4. Power take-off connecting device according to any one of the preceding claims, **characterised in that** a power take-off connecting arrangement (151) on the vehicle comprising the coupling shaft (153), a bearing shaft (154) connected to it and bearing seat is present wherein the coupling shaft (153) has a set of external teeth designed with flank clearance on a coupling side, and wherein the bearing shaft (154) is rotatably housed in the bearing seat by a bearing device and an approximately circular shoulder is arranged in the bearing seat, said shoulder forming an axial stop for the coupling shaft (153), wherein the bearing seat has a stop plate on the vehicle end, and an end of the coupling shaft (153) on the vehicle has a bowl-shaped recess with a set of internal teeth and an end, on the coupling side, of the bearing shaft has a correspondingly designed set of external teeth to form an anti-rotation arrangement and wherein coupling shaft and bearing shaft (154) are connected together by means of a screw connection.

5. Power take-off connecting device according to any one of the previous claims, **characterised in that** a power take-off connecting arrangement (152) on the mounted implement is present comprising the coupling hub (177), formed in the shape of a bowl, and a bearing seat (178), wherein the coupling hub (177) has, on a coupling side, internal teeth (189) arranged with flank clearance, which is designed to correspond with the external teeth on a coupling shaft (153) of a power take-off connecting arrangement on the vehicle side, and wherein the coupling hub (177) has a cylindrical bearing section on the mounted implement, which is pivoted in the bearing seat (178) by means of a bearing arrangement and, in the bearing seat (178), an approximately circular shoulder is arranged which forms the axial stop for the coupling hub (177) wherein the bearing seat has a stop wall at an end on the mounted implement.

6. Power take-off connecting device according to any one of the previous claims, **characterised in that** at least one Belleville washer is arranged between bearing arrangement and stop wall.

7. Power take-off connecting device according to any one of the previous claims, **characterised in that** a connecting shaft (156) is provided which can be connected to the bearing shaft (154) wherein the connecting shaft (156) and the bearing shaft (154) have external teeth (160, 161) in a connecting area on their respective jacketing (158, 159), and wherein, in the region of these teeth, a correspondingly designed, tubular sleeve (162) is provided which has a corresponding set of internal teeth (163) and connects the bearing shaft (154) to the connecting shaft (155).

8. Power take-off connecting device according to any one of the previous claims, **characterised in that** one end of the connecting shaft (156) on the vehicle can be connected via a power take-off coupling to a gearbox on the vehicle.

9. Power take-off connecting device according to any one of the previous claims, **characterised in that** the connecting sleeve (162) is connected via appropriate circlips (164) both to the bearing shaft (154) as well as to the connecting shaft (155) to prevent slipping or moving axially.

10. Power take-off connecting device according to any one of the previous claims, **characterised in that**, on its coupling or connecting end (165), the connecting shaft (155) has a front face (166) with a centring pin (167) extending in the longitudinal direction, wherein the bearing shaft (154) has a correspondingly designed centring recess (169) corresponding to its end (168) on the vehicle.

11. Power take-off connecting device according to any one of the previous claims, **characterised in that**, in a docking recess (31) to connect an agricultural vehicle and a mounted implement by means of the docking recess (31) and a corresponding docking slot in the docking recess (31), an appropriate bearing seat (170) is designed as a bearing for the bearing shaft (154) wherein the bearing seat is a component part of the power take-off connecting arrangement (151) on the vehicle and is connected inextricably with the docking recess (31) by welding or can be detached although secured by means of screw connections.

12. Power take-off connecting device according to any one of the previous claims, **characterised in that** the bearing seat (170) has a stop plate (173) at its end (172) on the vehicle wherein the bearing arrangement (171) is supported by appropriate Belleville washers (174) on the stop plate (173) wherein the Belleville washers (174) are designed to protect the bearing arrangement (171) from wear and damage during the coupling process of the two power take-off shafts.

13. Power take-off connecting device according to any one of the previous claims, **characterised in that** the bearing shaft (154) is connected to the bowl-shaped coupling shaft (153), wherein a coupling shaft (153) is secured and connected axially by a central screw connection (175) to the connecting end (165) of the bearing shaft (154), wherein this securing has some play in an axial as well as in a radial direction, which is greater than the tooth clearance in the relevant standard set of teeth, wherein the coupling shaft (153) has an appropriate set of internal teeth (176).

14. Power take-off connecting device according to any one of the previous claims, **characterised in that** the coupling shaft (153) has a recess (80) at its end on the vehicle (179) into which the bearing shaft (154) is received, wherein, for a connection, the bearing shaft (154) has an appropriate external set of teeth (181) in this area, and the coupling shaft has a correspondingly shaped internal set of teeth (182).

15. Power take-off connecting device according to any one of the previous claims, **characterised in that** the coupling shaft (173) forms a connection or coupling with a bowl-shaped coupling hub (177) of the power take-off connecting arrangement (152) on the mounted implement side of a mounted implement.

16. Power take-off connecting device according to any one of the previous claims, **characterised in that** the coupling hub (177) is arranged axially fixed in a fashion identical to that of the coupling shaft (153) in an appropriate bearing seat (178) in a docking slot (32) of the mounted implement.

17. Power take-off connecting device according to any one of the previous claims, **characterised in that** the coupling shaft (153) has an appropriate set of external teeth (190) on the coupling end in order to attach the coupling shaft (153) to the internal set of teeth of the coupling hub (177) wherein a radially encircling shoulder (183) of the coupling shaft (153) forms a stop which is housed in the bearing seat (170) of the docking recess.

18. Power take-off connecting device according to any one of the previous claims, **characterised in that** the coupling hub (177) is pivoted in the bearing seat (178) of the power take-off connecting arrangement (152) on the mounted implement by a bearing arrangement (184), in particular a ball race, wherein the bearing seat (178) forms the axial stop (185) of the coupling hub, wherein Belleville washers (186) are provided in the bearing seat (178) in the area between the bearing arrangement (184) and the bearing seat (178) in order to protect the bearing arrangement (184) from damage, wherein, on its connecting or coupling end (187), the coupling hub (177) has a bowl-shaped recess (188) with an internal set of teeth (189) to mesh with the external set of teeth (190) of the coupling shaft (153).

19. Method of producing a power take-off connection between a vehicle having a power take-off and a shaft to connect with the power take-off shaft of a mounted implement or a supplementary axle with a power take-off connecting device according to any one of the previous claims, **characterised in that** the vehicle, for its part, and the mounted implement and/or the supplementary axle for its/their part have docking arrangements which correspond with each other and collaborate to produce a mechanical connection, wherein the vehicle has a docking recess and the mounted implement has a docking slot, or in reverse, wherein the docking slot is pulled into the docking recess with hydraulic entry or arrestor hooks wherein a coupling hub is pushed axially on to the coupling shaft, appropriate to the pushing motion which is carried out by the hydraulic entry or arrestor hooks, wherein the teeth with their flanks converging on the coupling side slide along their tooth flanks one after the other on the coupling shaft and on the coupling hub during the pushing motion and, as a result, the shafts rotate in the detachable position and the coupling hub slides on to the coupling shaft.

## Revendications

1. Dispositif de liaison d'arbre de prise de force pour relier un entraînement d'arbre de prise de force d'un véhicule à un entraînement d'arbre de prise de force d'un accessoire, dans lequel un dispositif de liaison d'arbre de prise de force côté véhicule et un dispositif de liaison d'arbre de prise de force côté accessoire qui peut être couplé ou relié à celui-ci par conjonction de force sont présents, dans lequel des éléments de couplage mécanique sont prévus sur le véhicule et des éléments de contre-couplage mécanique correspondants sont prévus sur un dispositif, lesquels peuvent être glissés les uns dans les autres et verrouillés les uns aux autres, dans lequel
le dispositif de liaison d'arbre de prise de force côté véhicule et le dispositif de liaison d'arbre de prise de force côté accessoire sont chacun fixés axialement au véhicule ou à l'accessoire ou au dispositif d'attelage du véhicule et au dispositif d'attelage de l'accessoire, de sorte que lorsque le véhicule et l'accessoire sont reliés mécaniquement, les dispositifs de liaison d'arbre de prise de force soient couplés positivement les uns aux autres, **caractérisé en ce que**
le dispositif de liaison d'arbre de prise de force (151) côté véhicule comprend un arbre d'accouplement (153) côté véhicule, un arbre de palier (154) qui est relié à celui-ci et un arbre de liaison (155), dans lequel l'arbre de palier (154) est renfermé et supporté dans un siège de palier (170) au moyen d'un dispositif de palier (171), dans lequel l'arbre de palier (154) est relié à l'arbre d'accouplement réalisé en forme de coupelle (153), dans lequel l'arbre d'accouplement 153 est fixé axialement et relié à l'extrémité côté liaison 165 de l'arbre de palier 154 par l'intermédiaire d'une liaison vissée centrale 175 et l'arbre d'accouplement (153) forme une liaison ou un couplage avec un moyeu d'accouplement en forme de coupelle (177) du dispositif de liaison de prise de force côté accessoire (152) d'un accessoire, dans lequel le moyeu d'accouplement (177) est fixé axialement dans un siège de palier correspondant (178) dans une fente d'ancrage de l'accessoire et l'arbre d'accouplement (153) présente une denture externe (190) correspondant à l'extrémité du côté d'accouplement, pour relier l'arbre d'accouplement (153) à la denture interne du moyeu d'accouplement (177), dans lequel le moyeu d'accouplement (177) présente un logement en forme de coupelle (188) comportant la denture interne (189) pour recevoir la denture externe (190) à son extrémité de liaison ou de couplage (187) de l'arbre d'accouplement (153), dans lequel ceux-ci sont conçus en conséquence de manière correspondante.

2. Dispositif de liaison d'arbre de prise de force selon la revendication 1,
**caractérisé en ce que**,
le dispositif de liaison d'arbre de prise de force comprend un arbre d'accouplement (153) avec un côté d'accouplement qui présente une denture externe conçue avec un jeu de denture et comprend également un moyeu d'accouplement (177) en tant que dispositif de liaison de prise de force correspondant (152), qui présente une denture interne conçue avec un jeu de denture sur une face de couplage, qui est formée de manière correspondante à la denture externe de l'arbre d'accouplement (153).

3. Dispositif de liaison de prise de force selon la revendication 2,
**caractérisé en ce que**,
la denture externe de l'arbre d'accouplement (153) et la denture interne du moyeu d'accouplement (177) sont conçues de telle sorte que la denture ou les dents soient chanfreinées axialement vers les faces frontales côté accouplement ou soient conçues avec des flancs convergents à forte conicité, de sorte que les dents forment respectivement un entonnoir pour la denture correspondante, de sorte qu'une denture interne ou la denture externe puisse coulisser le long des flancs inclinés ou chanfreinés lors du couplage de telle sorte que les dentures puissent tourner et coulisser l'une dans l'autre.

4. Dispositif de liaison d'arbre de prise de force selon une des revendications précédentes, **caractérisé en ce qu'**un dispositif de liaison d'arbre de prise de force (151) côté véhicule comprenant l'arbre d'accouplement (153), un arbre de palier (154) relié à celui-ci et un siège de palier est présent, dans lequel l'arbre d'accouplement (153) présente sur un côté d'accouplement une denture externe avec un jeu de denture, et dans lequel l'arbre de palier (154) est monté de manière rotative dans le logement de palier au moyen d'un dispositif de palier et un épaulement sensiblement annulaire est formé dans le siège de palier, qui forme une butée axiale pour l'arbre d'accouplement (153), dans lequel le siège de palier présente une plaque de butée sur l'extrémité côté véhicule, et une extrémité côté véhicule de l'arbre d'accouplement (153) présente un évidement en forme de coupelle avec une denture interne et une extrémité côté accouplement de l'arbre de palier présente une denture externe conçue de manière correspondante pour former une sécurité anti-torsion et dans lequel l'arbre d'accouplement et l'arbre de palier (154) sont reliés l'un à l'autre au moyen d'une liaison vissée.

5. Dispositif d'arbre de liaison de prise de force selon une des revendications précédentes, **caractérisé en ce qu'**il existe un dispositif de liaison de prise de force côté accessoire (152) comprenant le moyeu d'accouplement en forme de coupelle (177) et un siège de palier (178), dans lequel le moyeu d'accouplement (177) sur une face d'accouplement présente une denture interne (189) avec un jeu de denture, qui est conçue pour correspondre à la denture externe d'un arbre d'accouplement (153) d'un dispositif de liaison d'arbre de prise de force côté véhicule, et dans lequel le moyeu d'accouplement (177) sur la partie de fixation présente une section de palier cylindrique qui est montée rotativement dans le siège de palier (178) au moyen d'un dispositif de palier et dans le siège de palier (178) un épaulement sensiblement annulaire est réalisé, qui forme une butée axiale pour le moyeu d'accouplement (177), dans lequel le siège de palier présente une paroi de butée à une extrémité côté accessoire.

6. Dispositif d'arbre de liaison de prise de force selon une des revendications précédentes, **caractérisé en ce qu'**au moins un ressort à disques est disposé entre le dispositif de palier et la paroi de butée.

7. Dispositif d'arbre de liaison d'arbre de prise de force selon une des revendications précédentes, **caractérisé en ce qu'**il est prévu un arbre de liaison (156) qui peut être relié à l'arbre de palier (154), dans lequel l'arbre de liaison (156) et l'arbre de palier (154) dans une zone de liaison sur leur paroi de manchon respective (158, 159) présentent une denture externe (160, 161), et dans la zone de ces dentures est prévu un manchon tubulaire (162), réalisé de manière correspondante, qui présente une denture interne correspondante (163), et relie l'arbre de palier (154) à l'arbre de liaison (155).

8. Dispositif d'arbre de liaison de prise de force selon une des revendications précédentes, **caractérisé en ce qu'**une extrémité côté véhicule de l'arbre de liaison (156) peut être reliée à une transmission de véhicule via un embrayage de prise de force.

9. Dispositif d'arbre de liaison de prise de force selon une des revendications précédentes, **caractérisé en ce que** le manchon de liaison (162) est relié tant à l'arbre de palier (154) qu'à l'arbre de liaison (155) au moyen de circlips correspondants (164) pour empêcher un glissement axial ou déplacement.

10. Dispositif d'arbre de liaison de prise de force selon une des revendications précédentes, **caractérisé en ce que** l'arbre de liaison (155) présente, à son extrémité côté accouplement ou liaison (165), une face frontale (166) avec un axe de centrage (167) s'étendant dans le direction longitudinale, dans lequel l'arbre de palier (154) présente de façon correspondante un évidement de centrage conçu de manière correspondante (169) à son extrémité (168) côté véhicule.

11. Dispositif d'arbre de liaison de prise de force selon une des revendications précédentes, **caractérisé en ce que** dans un réceptacle d'attelage (31) pour relier un véhicule agricole et un accessoire au moyen du réceptacle d'attelage (31) et d'un insert d'attelage correspondant dans le réceptacle d'attelage (31), un siège de palier (170) correspondant pour monter l'arbre de palier (154) est formé, dans lequel le siège de palier fait partie intégrante du dispositif de liaison d'arbre de prise de force (151) côté véhicule et est relié au réceptacle d'attelage (31) de manière détachable au moyen d'une liaison soudée ou détachable mais fixée au moyen de liaisons visées correspondantes.

12. Dispositif d'arbre de liaison de prise de force selon une des revendications précédentes, **caractérisé en ce que** le siège de palier (170) présente une plaque de butée (173) à son extrémité (172) côté véhicule, dans lequel le dispositif de palier (171) est monté sur la plaque de butée (173) par l'intermédiaire de ressorts à disques correspondants (174), dans lequel les ressorts à disques (174) sont destinés à protéger le dispositif de palier (171) contre l' usure et les détériorations au cours du processus d'accouplement de deux arbres de prise de force.

13. Dispositif d'arbre de liaison de prise de force selon une des revendications précédentes, **caractérisé en ce que** l'arbre de palier (154) est relié à l'arbre d'accouplement en forme de coupelle (153), dans lequel un arbre d'accouplement (153) est fixé axialement et relié à l'extrémité côté liaison (165) de l'arbre de palier (154) par l'intermédiaire d'une liaison vissée centrale (175), dans lequel cette fixation comportant un jeu dans la direction axiale ainsi que dans la direction radiale qui est supérieur à un jeu de denture correspondant dans la cannelure correspondante, dans lequel l'arbre d'accouplement (153) présente une denture interne correspondante (176).

14. Dispositif de liaison d'arbre de prise de force selon une des revendications précédentes, **caractérisé en ce que** l'arbre d'accouplement (153) présente à son extrémité côté véhicule (179) un évidement (80) dans lequel est logé l'arbre de palier (154), dans lequel l'arbre de palier (154) à des fins de liaison présente dans cette zone une denture externe correspondante (181) et l'arbre d'accouplement présente une denture interne conçue de manière correspondante (182).

15. Dispositif d'arbre de liaison de prise de force selon une des revendications précédentes, **caractérisé en ce que** l'arbre d'accouplement (173) forme une liaison ou un couplage avec un moyeu d'accouplement en forme de coupelle (177) du dispositif de liaison de prise de force côté accessoire (152) d'un accessoire.

16. Dispositif d'arbre de liaison de prise de force selon une des revendications précédentes, **caractérisé en ce que** le moyeu d'accouplement (177) est disposé axialement fixé de la même manière que l'arbre d'accouplement (153) dans un logement de palier correspondant (178) dans une fente d'attelage (32) de l'accessoire.

17. Dispositif d'arbre de liaison de prise de force selon une des revendications précédentes, **caractérisé en ce que** l'arbre d'accouplement (153) présente une denture externe (190) correspondante à l'extrémité de couplage pour relier l'arbre d'accouplement (153) à la denture interne du moyeu d'accouplement (177), dans lequel un épaulement radialement périphérique (183) de l'arbre d'accouplement (153) forme une butée qui est reçue dans le siège de palier (170) du réceptacle d'attelage.

18. Dispositif de liaison d'arbre de prise de force selon une des revendications précédentes, **caractérisé en ce que** le moyeu d'accouplement (177) est monté rotativement dans le siège de palier (178) du dispositif de liaison d'arbre de prise de force côté accessoire (152) par l'intermédiaire d'un dispositif de palier (184) en particulier un roulement à billes, dans lequel le siège de palier (178) forme la butée axiale (185) du moyeu d'embrayage, dans lequel des ressorts à disque (186) sont prévus dans le siège de palier (178) dans la zone entre le dispositif de palier (184) et le siège de palier (178) afin de protéger le dispositif de palier (184) contre les détériorations, dans lequel le moyeu d'accouplement (177) présente un logement en forme de coupelle (188) comportant la denture interne (189) pour recevoir la denture externe (190) de l'arbre d'accouplement (153) à son extrémité de liaison ou de couplage (187).

19. Procédé de réalisation d'une liaison d'arbre de prise de force entre un véhicule à prise de force et un arbre d'un accessoire à relier à la prise de force ou d'un essieu supplémentaire avec un dispositif de liaison de prise de force selon une des revendications précédentes, **caractérisé en ce que** le véhicule d'une part et l'accessoire et/ou l'essieu supplémentaire d'autre part présentent des dispositifs d'attelage, qui correspondent les uns aux autres et interagissent pour établir une liaison mécanique, dans lequel le véhicule dispose d'un réceptacle d'attelage et l'accessoire dispose d'un insert d'attelage, ou vice versa, dans lequel l'insert d'attelage est tiré dans le réceptacle d'attelage avec des crochets de traction ou de préhension hydrauliques, dans lequel un moyeu d'accouplement est poussé axialement sur l'arbre d'accouplement en fonction du mouvement d'insertion qui est effectué avec les crochets de traction ou de préhension hydrauliques, dans lequel les dents avec leurs flancs convergeant vers le côté d'accouplement sur l'arbre d'accouplement et sur le moyeu d'accouplement coulissent l'un sur l'autre le long de leurs flancs de dent pendant le mouvement d'insertion et font ainsi tourner les arbres dans la position d'accouplement et le moyeu d'accouplement glisse sur l'arbre d'accouplement.
